# EUROPEAN PATENT SPECIFICATION

(11) **EP 2 489 511 B1**
(45) Date of publication and mention of the grant of the patent: **29.04.2015**
(21) Application number: 10823411.3
(22) Date of filing: 13.10.2010
(51) Int. Cl.: B32B 27/16, B32B 37/20, B32B 27/32, B65D 65/02

(54) **LAMINATE PRODUCTION METHOD, LAMINATE, AND PACKAGING CONTAINER USING SAME**
VERFAHREN ZUR HERSTELLUNG EINER BESCHICHTUNG, BESCHICHTUNG SOWIE VERPACKUNGSBEHÄLTER DAMIT
PROCEDE DE PRODUCTION DE STRATIFIE, STRATIFIE ET RECIPIENT D'EMBALLAGE L'UTILISANT

(30) Priority: 13.10.2009 JP 2009236158
(43) Date of publication of application: 22.08.2012
(60) Divisional application: 13183182.8
(73) Proprietor: Fujimori Kogyo Co., Ltd, Shinjuku-ku, Tokyo 160-0023 (JP)
(72) Inventor: MANABE Atsushi, Tokyo 160-0023 (JP); FUCHU Junko, Tokyo 160-0023 (JP); KUBOTA Tomoko, Tokyo 160-0023 (JP); OGUNI Moritoshi, Tokyo 160-0023 (JP)
(74) Representative: Zacco GmbH
(86) International application number: PCT/JP2010/067955
(87) International publication number: WO 2011/046143

(56) References cited:
- EP-A2- 0 178 812
- JP-A- 2000 218 675
- JP-A- 2003 266 626
- JP-A- 2007 181 943
- US-A- 3 959 567
- US-B1- 6 893 529

## Description

### TECHNICAL FIELD

The present invention relates to a laminate production method using a surface-modified film, a laminate, and a packaging container using the same. Priority is claimed on Japanese Patent Application published with number JP 2011-83906 A, filed October 13, 2009. In detail, the present invention relates to a laminate production method and a laminate which use no adhesive or anchor coating agent to thereby eliminate the occurrence of VOC (volatile organic compound) completely, and which provide superior environmental handling performance and superior energy conservation handling performance. The present invention also relates to a clean packaging container produced with use of the same, which eliminates the occurrence of low molecular components attributed to a bonding agent or an anchor coating agent, which may become a contaminant source for the content of the packaging container.

Moreover, the laminate according to the present invention may be used for various applications including cosmetic sheets, optical films, protective films, and packaging containers. Furthermore, a packaging container produced using the laminate of the present invention may be widely used for a packaging container or a refill packaging container for various kinds of liquid products such as liquid flavoring materials, liquid detergents, liquid bleaching agents, liquid wax, hair-care products (such as shampoo and conditioner), medical solutions, and liquid cosmetic products, and further, it may be used for various packaging containers for food, electronic components, medical components, medical apparatus components, precision machinery components, and so forth.

### BACKGROUND ART

Conventionally, flavoring materials such as dietary salt and pepper, and particulate materials such as powdered milk for coffee are stored and kept in a plastic made refill packaging container, and are transferred into a tabletop container or the like by hand for use when using these materials.

Moreover, refill packaging containers are used for selling various kinds of liquid products including liquid flavoring materials such as cooking sauce, liquid detergent for tableware and garments, liquid bleaching agents, liquid wax, hair-care products (such as shampoo and conditioner), and liquid cosmetic products. For example, instead of conventional cans, bottles, or plastic bottles with a hand pump, these products are stored in refill plastic packaging containers produced using a multilayer film, and then are sold to general consumers. The consumer who purchased the product then transfers the product content into a plastic made dedicated bottle or the like by hand.

As an example of the social background of this kind of phenomenon, there is a strong demand for companies that produce and sell these products to not only pursue economical efficiency but also to pay sufficient attention to measures for resource saving and global environment protection by reducing the weight of the synthetic resin used in their product packaging containers to thereby reduce the weight and cost of the product packaging container, and by reducing container volume to thereby improve disposability of the packaging container waste after the content thereof has been used up.

Moreover, an electronic component such as a semiconductor apparatus and a liquid crystal display, a medical component, a medical apparatus component, or a precision machinery component, is placed on a plastic tray or stored in a box to be transported. Transportation of the above component is required to maintain a high level of cleanness. Accordingly, the component needs to be protected from contamination caused by grit, dust, microorganisms, and chemicals, humidity, extreme temperature changes, and ultraviolet rays during transportation. Therefore, the component is transported in a state where the entirety of the tray or storage box is covered with a highly clean packaging container.

Examples of packaging containers used for packaging an electronic component include a plastic bag and a sheet-molded container. An electronic component is stored in the packaging container, and is shipped in a state where the opening part of the packaging container is closed and hermetically sealed.

In the packaging container, as a constituent material of the packaging container, there is used a laminate which combines two or more kinds of film, aluminum foil, and deposition film (a deposition thin film of aluminum, silica, or alumina is laminated on a substrate). As the laminate, for example, in the case where the filling opening of the packaging container is hermetically sealed by welding with use of a heat bar, that is, by means of a so-called heat sealing after the content has filled the container, on the inner surface of the laminate, which serves as the heat-sealing surface, there is used, as a heat-sealing layer, a layer of highly sealable polyolefin resin such as polyethylene resin.

Furthermore, on the laminate, there are laminated polyamide, polyester, an aluminum foil, a deposition film, and so forth in order to provide other functions. Therefore, the laminate, in which a highly heat-sealable polyethylene resin and a polyamide resin film are laminated for example, is preliminarily prepared, and a final packaging container is molded using this laminate.

Moreover, there is a need for providing the packaging container with various kinds of functions, depending on usage of the packaging container. The packaging container is required to have various functions, for example, to have light blocking functionality, to comprise a re-sealable zipper, and to have an independent shape.

Furthermore, an appropriate shape may be selected from commonly known packaging container shapes and used for the packaging container, according to the form and aspect of the content that fills the packaging container. For example, a self-standing pouch shape (for example, refer to Patent Documents 1 and 2), a three-sided or four-sided seal flat bag shape (for example, refer to Patent Document 3), a gusset bag shape, a pillow type packaging shape, and a storage case shape are suitably used.

Moreover, as an example of an application for an electronic component, a medical component, a medical apparatus component, or a precision machinery component, under an operational environment where the level of cleanness is specially managed, a laminate for packaging material is produced using substrate films, the cleanness of which is maintained and managed, and then, a clean package (hereunder, packaging bag and packaging container are collectively referred to as package), which uses this laminate, is produced.

As the film lamination method used for a conventional laminate, a laminate with films laminated therein is produced by means of a dry lamination method, which is performed with use of a bonding agent, or an extrusion lamination method, which is performed with use of an anchor coating agent, in order to combine two or more kinds of films and bond the films together.

The level of bond strength in the laminate may become insufficient in some cases if no bonding agent or anchor coating agent is used. However, in those cases where a bonding agent or an anchor coating agent is used, in the step of laminating the films, dissipation of VOC (volatile organic compound), which occurs as a result of an organic solvent being evaporated or dried, becomes an environmental problem. Therefore, as a more preferable method of producing a laminate for a packaging container, there is a demand for a method which enables production of a laminate having a required level of bond strength without using a bonding agent or an anchor coating agent.

To address the problem above, there have been proposed various methods for producing a laminate without using a bonding agent or an anchor coating agent (for example, refer to Patent Documents 4 to 10).

Patent Document 4 discloses an extrusion lamination method in which: at least one surface of a plastic substrate undergoes a surface oxidation treatment by means of corona treatment, plasma treatment, frame plasma treatment, electron beam irradiation, or ultraviolet irradiation; at least one surface of a melt-extruded film undergoes an ozonation treatment; and then both of these are brought into contact with each other and pressure-bonded with each other.

Patent Document 5 discloses an extrusion lamination method in which: at least one surface of a plastic substrate undergoes a surface treatment under an atmosphere of an inert gas such as argon, helium, krypton, neon, xenon, and nitrogen, by means of electron beam irradiation, low-pressure plasma treatment, atmospheric-pressure plasma treatment, or corona discharge treatment; at least one surface of a melt-extruded film undergoes an ozonation treatment; and then both of these are brought into contact with each other and pressure-bonded with each other.

Patent Document 6 discloses a surface treatment method for a synthetic resin characterized in that a corona discharge treatment is performed within a mixed gas atmosphere essentially composed of nitrogen and carbon dioxide (preferably, oxygen concentration not more than 0.1 vol %) in order to improve the bond strength with respect to a printing ink or a metal deposition film.

Patent Document 7 discloses a gas barrier film production method in which: a surface being treated having a nitrogen-carbon atomic ratio (N/C) in a range of 0.001 to 0.1 on the substrate surface film measured by means of an ESCA method is produced by means of corona discharge treatment performed under a nitrogen gas (oxygen concentration not more than 3 vol %), a carbon dioxide gas, or a mixed gas atmosphere essentially composed of nitrogen and carbon dioxide; and a coating agent, which, with a water and lower alcohol mixed solution serving as a solvent, is primarily composed of a water-soluble polymer and an inorganic layer compound, is applied and then dried on the surface being treated to thereby form a coating film.

Patent Document 8 discloses a method of laminating at least two or more layers, for example, polyolefin resins such as cast polyethylene (PE) and cast polypropylene (CPP), without using a bonding agent. Specifically, there is disclosed a method in which the surface of the resin to be laminated undergoes a low-temperature plasma treatment with use of a scanning type glow discharge plasma apparatus, and then, lamination is performed by means of thermal compression bonding.

Patent Document 9 discloses a bonding apparatus and a bonding method in which substrates respectively having a fluorine resin sheet surface plasma-treated on an atmospheric-pressure plasma treatment apparatus are bonded with each other by performing compression bonding at a temperature not higher than the boiling point of the substrates, without using a bonding agent and without changing the structure and composition of the substrates.

Patent Document 10 discloses an adhesive-free aramid-polyester laminate in which an aramid paper composed of plasma-surface-treated aramid fibers and an aramid pulp, and a plasma-treated polyester film are continuously lamination-adhered with each other at room temperature to 200°C, using a press roller.

Patent Document 11 discloses a process and apparatus for bonding shaped members without the use of an adhesive. The method is comprising the steps of exposing the surfaces to be bonded to the low energy particles of a gas discharge plasma just before and substantially simultaneously as the members are brought together into intimate face-to-face contact; heating the members; and then compressing the heated members together. The process is applicable to bonding a thermoplastic resin such as polyethylene or ethylene-vinyl acetate copolymer to a wide variety of materials including cellophane, polyester or aluminum foil.

Patent Document 12 discloses a method of producing a well-integrated laminate material, in which method first web of plastic, and a second web of plastic are brought together and permanently united to one another by the simultaneous application of heat and pressure, for the formation of the laminate material. In order to improve the adhesion between the webs, these are subjected to a surface-activating treatment of non-chemical nature, preferably a corona treatment, prior to the uniting of the webs, whereby good adhesion and bonding between the webs is achieved without the employment of interjacent chemical adhesives.

### [Prior Art Documents]

### [Patent Documents]

[Patent Document 1] Japanese Unexamined Patent Application, First Publication No. 2001-058655
[Patent Document 2] Japanese Unexamined Patent Application, First Publication No. H08-324590
[Patent Document 3] Japanese Unexamined Patent Application, First Publication No. H 11-059704
[Patent Document 4] Japanese Unexamined Patent Application, First Publication No. H07-314629
[Patent Document 5] Japanese Unexamined Patent Application, First Publication No. H09-234845
[Patent Document 6] Japanese Examined Patent Application, Second Publication No. S57-30854
[Patent Document 7] Japanese Unexamined Patent Application, First Publication No. H09-111017
[Patent Document 8] Japanese Unexamined Patent Application, First Publication No. H03-162420
[Patent Document 9] Japanese Unexamined Patent Application, First Publication No. 2008-075030
[Patent Document 10] Japanese Unexamined Patent Application, First Publication No. 2008-183868
[Patent Document 11] US 3,959,567 A
[Patent Document 12] US 6,893,529 B1

### DISCLOSURE OF INVENTION

### [Problems to be Solved by the Invention]

In the methods disclosed in Patent Documents 4 and 5, which are heretofore known techniques, the level of bond strength of the laminate may be insufficient in some cases if a corona treatment and an UV and ozonation treatment are only simply combined and performed under an air atmosphere.

Patent Documents 6 and 7 disclose the methods in which the bond strength is improved by modifying the synthetic resin surface by means of a corona discharge treatment performed under an atmosphere which contains nitrogen and substantially no oxygen. However, Patent Documents 6 and 7 only disclose the bond strength with respect to a printing ink or a metal deposition film, and to a coating film primarily composed of a water-soluble polymer and an inorganic layer compound. In order to verify the level of thermal compression bonding between a resin film and the surface-treated surface of a synthetic resin activated by means of this kind of surface treatment method, the present inventors attempted to produce a laminate by a method in which a non-surface-treated resin film was laminated on a synthetic resin film which had undergone a corona discharge treatment under a nitrogen gas atmosphere. As a result, a sufficient level of bond strength could not be obtained in the laminate.

Patent Document 8 discloses the method in which a low-temperature plasma treatment is performed on the surface of a polyolefin resin such as cast polyethylene (PE), which is a non-polar thermoplastic resin, using a scanning type glow discharge plasma apparatus, and then lamination is performed by means of thermal compression bonding. Moreover, in those cases where a polar thermoplastic resin such as polyester and a non-polar thermoplastic resin are laminated, only the non-polar thermoplastic resin is treated using a modulated magnetic field plasma apparatus. However, it is preferable that the surface of the polar thermoplastic resin be used without undergoing a plasma treatment, because a high level of interlayer bonding strength can be obtained in this manner. It has been verified in an ESCA analysis that a C-O group and a C=O group are produced if the treatment is performed using a modulated magnetic field plasma apparatus, and it is accordingly disclosed that these produced functional groups contribute to bonding.

However, while the working example shows the thermal compression bonding temperature being 100°C at the time of performing thermal compression bonding on PP and LDPE, the value of applied pressure is not shown. Therefore, industrial applicability cannot be achieved.

Patent Document 9 discloses the method in which an atmospheric-pressure plasma treatment apparatus, which mixes an inert gas with a vaporized lower alcohol, which may be a primary alcohol or a secondary alcohol with a carbon number not more than 4, and supplies it to electrodes to perform the treatment, is used to thereby perform surface modification on the substrates, the surfaces of which are composed of a fluorine resin, and the surface-modified substrates are thermal-compression bonded at a temperature not higher than the boiling point of the substrates. However, while Patent Document 9 discloses that surface modification gives the fluorine resin on the surface hydrophilicity, it defines no standard for determining the preferred state of the treated resin surface which has undergone a plasma treatment. Moreover, while the thermal compression bonding temperature at the time of performing thermal compression bonding, for example with polytetrafluoroethylene (PTFE), the boiling point of which is 327°C, is disclosed as being not higher than 200°C, the value of applied pressure is not shown. Therefore, industrial applicability cannot be achieved.

Patent Document 10 discloses the method in which an aramid paper composed of plasma-surface-treated aramid fibers and an aramid pulp, and polyethylene terephthalate or polyethylene naphthalate are continuously lamination-adhered with each other at room temperature to 200°C, using a press roller with an applied pressure load of not less than 200 kgf/cm.

Patent Document 10 discloses that as a result of surface modification, a certain type of functional group such as a COOH group and OH group is formed on the film surface, and strong bonding can be achieved at a low temperature. However, it defines no standard for determining the preferred state of the treated resin surface which has undergone a plasma treatment. Furthermore, a specific description of the plasma treatment is omitted for the reason stated such that the plasma treatment is a widely known method for increasing the bond strength for various kinds of resins. Therefore, industrial applicability cannot be achieved.

Moreover, the dry lamination method, which uses a bonding agent, and the extrusion lamination method, which uses an anchor coating agent, both use an organic solvent and thus have a problem in terms of environmental handling performance and energy conservation handling performance. Furthermore, since a possibility of solvent residue and low-molecular component transfer is involved, there is a problem in that an influence of contamination in the content is inevitable. Therefore, it is required to reduce, to a maximum extent, the amount of bonding agent and anchor coating agent to be used when laminating films to produce a laminate.

Although films of the same type are thermocompression bonded, for example, in OPP (Oriented Polypropylene)/CPP (Cast Polypropylene) heat lamination, the level of bonding provided in thermocompression bonding between films of different kinds is low, and practical application thereof is difficult.

As can be seen from the above description, in conventional techniques, there has not been known a laminate in which films of different kinds are laminated using no bonding agent and anchor coating agent by means of thermocompression, and the occurrence of VOC (volatile organic compound) is completely eliminated, thereby providing superior environmental handling performance and superior energy conservation handling performance. Furthermore, there has not been known a packaging container produced with use of the laminate.

The present invention has been achieved, taking the above circumstances into consideration. That is to say, the present invention provides a laminate production method and a laminate which use no bonding agent and no anchor coating agent to thereby eliminate the occurrence of VOC (volatile organic compound) completely, and provides superior environmental handling performance and superior energy conservation handling performance. Furthermore, the present invention provides a clean packaging container produced with use of the laminate, which eliminates the occurrence of a low-molecular component attributed to a bonding agent or an anchor coating agent, which may become a contaminant source for the content of the packaging container.

### [Means for Solving the Problem]

In order to solve the above problems, the present invention provides a laminate production method according to claim 1. other, and are thermocompression-bonded by a heated roller to be continuously laminated, without application of a bonding agent or an anchor agent.

The first substrate is preferably composed of a kind of material selected from the group consisting of polyethylene terephthalate (PET), polyamide (PA), polyethylene naphthalate (PEN), polyacrylonitrile (PAN), polycarbonate (PC), polyimide (PI), and a cellophane film, and the second substrate is preferably composed of cast polyethylene (PE) or cast polypropylene (CPP).

At least on one surface of the film serving as the first substrate, there may be formed a print layer.

The present invention also provides a laminate according to claim 7.

Furthermore, the present invention provides a packaging container according to claim 9.

According to the present invention, manufacturing is performed using no bonding agent or anchor coating agent, and therefore, no environmental precautions need to be taken to address VOC (volatile organic compound), which occurs as a result of an organic solvent being evaporated or dried.

Moreover, according to the laminate production method of the present invention, no bonding agent or anchor coating agent is used, and therefore no organic solvent is used. As a result, no drying furnaces are required for solvent drying and removal, and it is possible to reduce the level of environmental load in terms of environmental handling and energy conservation handling.

Furthermore, according to the laminate of the present invention, in contrast with laminates produced by means of a film sandwich method or an extrusion lamination method, the extrusion resin is not heated to the melting temperature thereof, and therefore, no resin melting furnaces are required. As a result, energy conservation can be realized and the level of environmental load can be reduced.

Moreover, since no bonding agent or anchor coating agent is used, it is possible to use the laminate as a packaging container of contents, for which conventionally a laminate could not be used because reactive chemical substances contained in hair-care products, household products, agrochemical products, and so forth impinge on the bonding agent or anchor coating agent and can cause delamination.

According to the present invention, there can be provided a laminate production method such that a first substrate and a second substrate composed of different kinds of thermoplastic resin films or cellophane films are laminated, wherein a laminate with no bonding agent or anchor coating agent used therein is obtained.

Therefore, in contrast with a method of manufacturing a laminate by means of dry lamination with use of a bonding agent, in the laminate production method according to the present invention, no organic solvent is used, and therefore no drying furnaces and exhaust gas processing apparatuses are required for solvent drying and removal. That is to say, the level of environmental load can be reduced and accordingly a superior level of performance can be achieved in terms of environmental handling performance and energy conservation handling performance.

Moreover, in contrast with a method of producing a laminate by means of extrusion lamination with use of an anchor coating agent, in the laminate production method of the present invention, since the extrusion resin is not heated to the melting temperature thereof, no resin melting furnaces are required. Therefore, energy conservation and a reduction in environmental load can be achieved.

Furthermore, according to the present invention, on the surface of the film used for the laminate, there is formed a heat-bonding-modified layer having a required bond strength by means of surface modification performed with use of an atmospheric pressure plasma processor. As a result, a laminate that can be used for a practical packaging container can be obtained.

Moreover, according to the present invention, there can be obtained a laminate which uses no bonding agent or no anchor coating agent, and which provides superior environmental handling performance and energy saving handling performance.

Furthermore, according to the present invention, with use of a laminate which uses no bonding agent or no anchor coating agent, and which provides superior environmental handling performance and energy saving handling performance, there can be obtained a clean packaging container which eliminates the occurrence of a low-molecular component attributed to a bonding agent or an anchor coating agent, which may become a contaminant source for the content of the packaging container.

Moreover, according to the present invention, there can be provided a laminate such that a first substrate and a second substrate composed of different kinds of thermoplastic resin films or cellophane films are laminated, wherein no bonding agent or anchor coating agent are used therein.

Therefore, in contrast with a laminate produced by means of dry lamination with use of a bonding agent, in the laminate according to the present invention, no organic solvent is used, and therefore no drying furnaces and exhaust gas processing apparatuses are required for solvent drying and removal. That is to say, the level of environmental load can be reduced and accordingly a superior level of performance can be achieved in terms of environmental handling performance and energy conservation handling performance.

Moreover, in contrast with a laminate produced by means of extrusion lamination with use of an anchor coating agent, in the laminate of the present invention, since the extrusion resin is not heated to the melting temperature thereof, no resin melting furnaces are required. Therefore, energy conservation and a reduction in environmental load can be achieved.

Furthermore, according to the present invention, with use of a laminate which provides superior environmental handling performance and energy saving handling performance, there can be obtained a clean packaging container which eliminates the occurrence of a low-molecular component attributed to a bonding agent or an anchor coating agent, which may become a contaminant source for the content of the packaging container.

### BRIEF DESCRIPTION OF THE DRAWINGS

FIG 1 is a conceptual diagram showing an example of a production method of a laminate according to the present invention.
FIG. 2 is a conceptual diagram showing another example of the production method of the laminate, which is not claimed.
FIG 3 is a conceptual diagram showing still another example of the production method of the laminate according to the present invention.
FIG 4A shows an example of the laminate according to the present invention, and is a schematic cross-sectional view illustrating a state prior to thermocompression bonding.
FIG 4B shows an example of the laminate according to the present invention, and is a schematic cross-sectional view illustrating a state after the thermocompression bonding.
FIG 5A shows an example of a laminate having a print layer according to the present invention, and is a schematic cross-sectional view illustrating a state prior to thermocompression bonding.
FIG 5B shows an example of the laminate according to the present invention, and is a schematic cross-sectional view illustrating a state after the thermocompression bonding.
FIG 6A shows an example of a laminate of a conventional technique, and is a schematic cross-sectional view illustrating a state prior to dry lamination.
FIG 6B shows an example of the laminate of the conventional technique, and is a schematic cross-sectional view illustrating a state after the dry lamination.

### BEST MODE FOR CARRYING OUT THE INVENTION

Hereunder, a preferred embodiment of the present invention is described. In the following description, an untreated first substrate 1 and an untreated second substrate 6, and a surface-treated first substrate 5 and a surface-treated second substrate 8 are differentiated by reference symbols, and the wording such as "untreated" and "surface treated" may be omitted in some cases.

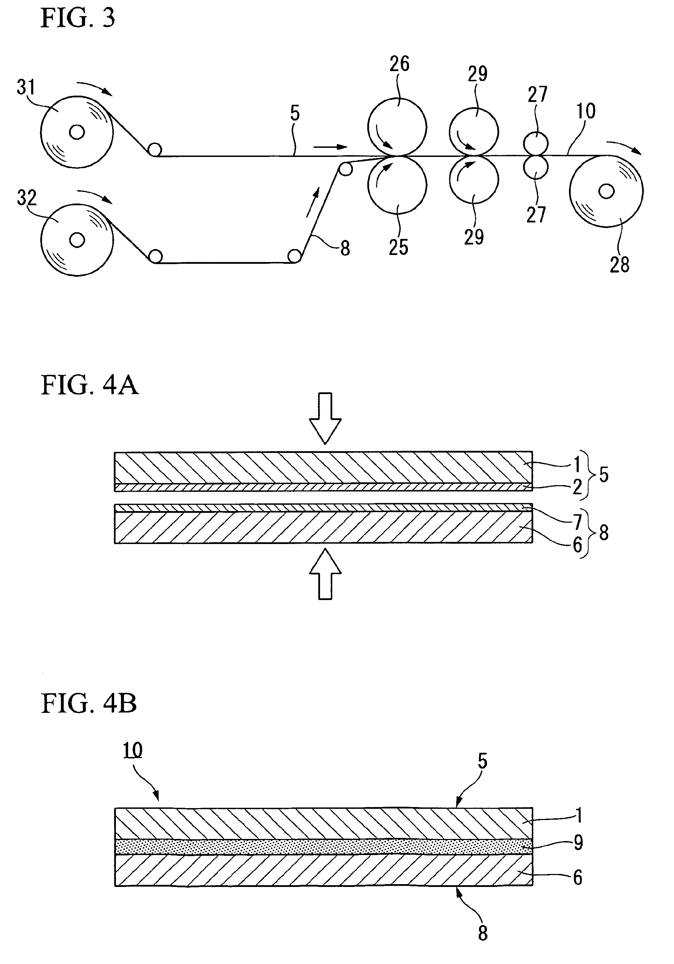

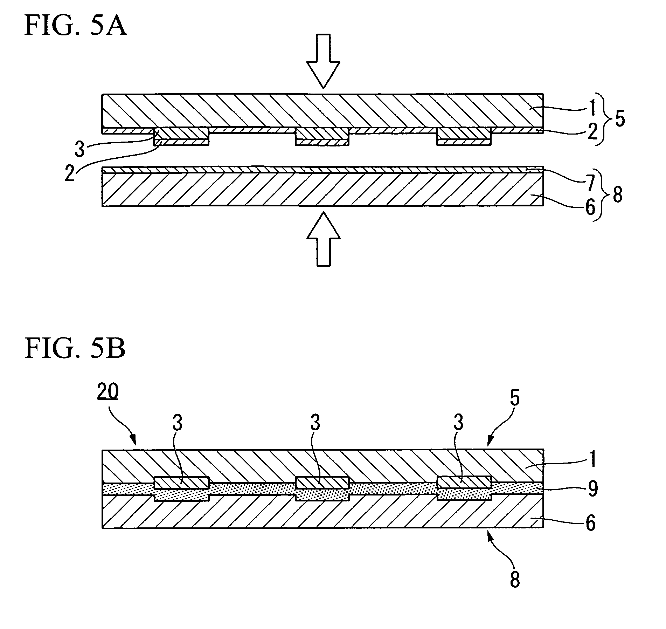

The surface-treated first substrate 5 and the surface-treated second substrate 8 are not differentiated by whether surface treatment is performed by means of atmospheric pressure plasma treatment or by means of air corona treatment, and the same reference symbols are used in both cases. Moreover, in FIG. 4A to FIG 5B, a surface-modified layer 7 of the second substrate 8 is not particularly differentiated from a heat-bonding-modified layer 7, and the same reference symbol 7 is used for both of them. In the present invention, the first substrate 5 may have a heat-bonding-modified layer instead of the surface-modified layer 2, and in this case, a surface-modified layer is provided on the second substrate 8.

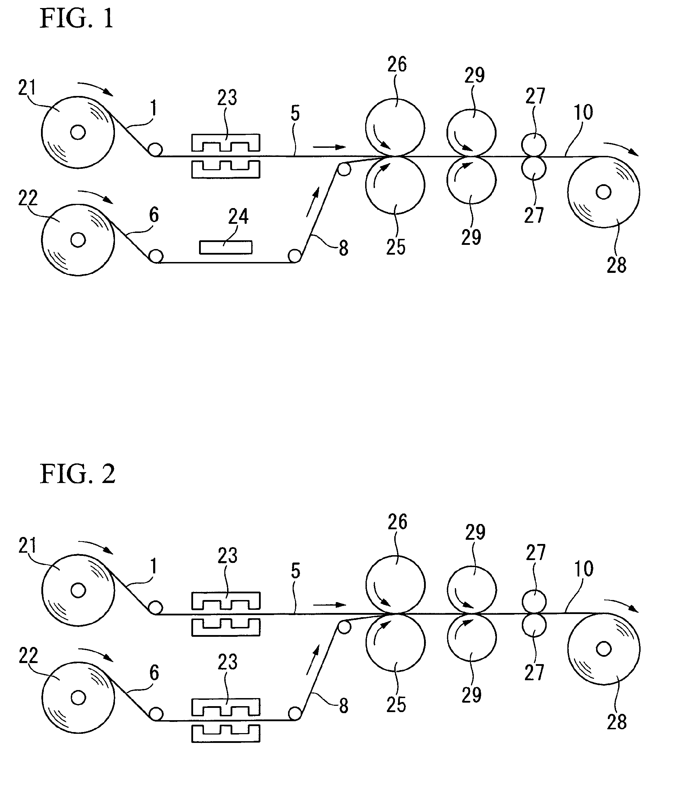

Moreover, as for the untreated first substrate 1 and the untreated substrate 6, the same reference symbols are used in both cases where they are treated as treatment targets (that is to say, in a state prior to the treatment) as shown in FIG. 1 and FIG. 2, and where they are treated, after the treatment, as portions which did not undergo the treatment as shown in FIG 4 to FIG. 5B.

FIG 1 is a conceptual diagram showing a production method of a laminate according to the present invention, and it illustrates a method of producing a laminate by laminating a first substrate 1 and a second substrate 6 composed of different kinds of films.

The first substrate 1 and the second substrate 6 are each formed from a longitudinal film, and they are respectively fed from a roll 21 of the first substrate 1 and a roll 22 of second substrate 6.

On the first substrate 5, there is formed a heat-bonding-modified layer by means of surface modification with use of an atmospheric pressure plasma processor 23, and the second substrate 8 is air-corona-treated with an air corona processor 24.

FIG 1 shows a case where online surface modification is performed, using the atmospheric pressure plasma processor 23 and the air corona processor 24. However, there may be used a roll 31 of the first substrate 5 with a heat-bonding-modified layer preliminarily formed thereon by means of surface modification with use of an atmospheric pressure plasma processor, and a roll 32 of the second substrate 8 which has been preliminarily air-corona-treated as shown in FIG 3.

The surface of the first substrate 5 with the heat-bonding-modified layer formed thereon, and the air-corona-treated surface of the second substrate 8 are provided opposing to each other, and they are thermocompression-bonded while pressure is being applied thereto, using a heated roller 25, the temperature of which is maintained at a predetermined temperature, and a backup roller 26. An obtained laminate 10 may be wound on a roll 28, or may be cut into a sheet laminate with a predetermined size (not shown in the figure).

The first substrate 5, which comes in contact with the heated roller 25, is required to have a melting point higher than the set temperature of the heated roller 25. This is required in order to solve a problem in that if the melting point of the first substrate 5 is lower than the set temperature of the heated roller 25, the first substrate 5 is melted and becomes attached on the heated roller 25 and consequently good thermocompression bonding cannot be performed.

Moreover, although it is not shown in the figure, an air corona processor may be used for surface treatment of the first substrate, and an atmospheric pressure plasma processor may be used for surface treatment of the second substrate.

Furthermore, FIG 1 shows a case where the heated roller 25 is used on the side that comes in contact with the substrate to be air-corona treated, and the backup roller 26 is used on the side that comes in contact with the substrate to be atmospheric-pressure-plasma treated. However, this may be done in the opposite manner, that is, a backup roller may be used on the side that comes in contact with the substrate to be air-corona treated, and a heated roller may be used on the side that comes in contact with the substrate to be atmospheric-pressure-plasma treated.

Moreover, both of the upper and lower rollers 25 and 26 may be a heated roller as necessary.

FIG 2 is a conceptual diagram showing a production method (not claimed) , and it illustrates a method of producing the laminate by performing surface modification on both of the first substrate 1 and the second substrate 6 composed of different kinds of films, using an atmospheric pressure plasma processor, and then laminating them by means of thermocompression bonding.

The first substrate 1 and the second substrate 6 are each formed from a longitudinal film, and they are respectively fed from a roll 21 of the first substrate 1 and a roll 22 of second substrate 6.

On the first substrate 5 and the second substrate 8, there is respectively formed a heat-bonding-modified layer by means of surface modification performed with use of the atmospheric pressure plasma processor 23. FIG 2 shows a case where online surface modification is performed, using the atmospheric pressure plasma processor 23. However, there may be used rolls 31 and 32 of the first substrate 5 and the second substrate 8 each with a heat-bonding-modified layer preliminarily formed thereon by means of surface modification with use of an atmospheric pressure plasma processor as shown in FIG 3.

The surfaces of the first substrate 5 and the second substrate 8 each with the heat-bonding-modified layer formed thereon are provided opposing to each other, and they are thermocompression-bonded while pressure is being applied thereto, using the heated roller 25, the temperature of which is maintained at a predetermined temperature, and the backup roller 26. An obtained laminate 10 may be wound on a roll 28, or may be cut into a sheet laminate with a predetermined size (not shown in the figure).

Moreover, both of the upper and lower rollers 25 and 26 may be a heated roller as necessary.

FIG 4A and FIG 4B are schematic cross-sectional views showing an example of the laminate according to the present invention. FIG. 4A is a schematic cross-sectional view showing a state prior to thermocompression bonding, and FIG 4B is a schematic cross-sectional view showing a state after the thermocompression bonding.

In this case, surface modification is performed at least on one surface of the first substrate 5, using an atmospheric pressure plasma processor, and a heat-bonding-modified layer 2 is formed thereon. Moreover, a surface-modified layer 7 is formed by means of an air corona treatment, or a heat-bonding-modified layer 7 is formed by an atmospheric pressure plasma processor, on one surface of the second substrate 8.

The surface of the first substrate 5 with the heat-bonding-modified layer 2 formed thereon, and the surface of the second substrate 8 with the surface-modified layer 7 or the heat-bonding-modified layer 7 formed thereon, are provided opposing to each other, and they are thermocompression-bonded at a predetermined heating temperature while being held with a predetermined level of pressure, to thereby obtain a laminate 10 according to the present invention. In this laminate 10, there is formed a thermal bonding part 9 which derives from the heat-bonding-modified layer 2 of the first substrate 5, and the surface-modified layer 7 or the heat-bonding-modified layer 7 of the second substrate 8, and it is a laminate in which no adhesive or anchor coating agent are used, and the first substrate 5 and the second substrate 8 are laminated.

A thermoplastic resin having a heat-sealing property is used in one resin film of this laminate 10, and therefore, it is possible to produce a packaging container by cutting this laminate 10 into predetermined shape and size, and hermetically sealing it by means of heat sealing while a heat seal layer resin is serving as the inner surface side.

FIG 5A and FIG 5B are schematic cross-sectional views showing another example of the laminate according to the present invention, and they are schematic cross-sectional views showing a laminate with a film having a print layer. FIG. 5A is a schematic cross-sectional view showing a state prior to thermocompression bonding, and FIG. 5B is a schematic cross-sectional view showing a state after the thermocompression bonding.

In FIG 5A and FIG. 5B, a print layer 3 is formed on one surface of a film 1 which serves as the first substrate. On the print layer 3 of the film 1, on which the print layer 3 is formed, there is performed a surface modification treatment using an atmospheric pressure plasma processor, and on the print layer and on the portion of the first substrate where the print layer is not formed, there is formed a heat-bonding-modified layer 2. The surface of the first substrate 5 with the heat-bonding-modified layer 2 formed thereon, and the surface of the second substrate 8 with the surface-modified layer 7 or the heat-bonding-modified layer 7 formed thereon, are provided opposing to each other, and they are thermocompression-bonded at a predetermined heating temperature while being held with a predetermined level of pressure, to thereby obtain a laminate 20 having a print layer according to the present invention. In this laminate 20, there is formed a thermal bonding part 9 which derives from the heat-bonding-modified layer 2 of the first substrate 5 and the print layer 3, and the surface-modified layer 7 or the heat-bonding-modified layer 7 of the second substrate 8, and it is a laminate in which no adhesive or anchor coating agent are used, and the first substrate 5 and the second substrate 8 are laminated.

A thermoplastic resin having a heat-sealing property is used in one resin film of this laminate 20, and therefore, it is possible to produce a practical packaging container having a print layer by cutting this laminate 20 into predetermined shape and size, and hermetically sealing it by means of heat sealing while a heat seal layer resin is serving as the inner surface side.

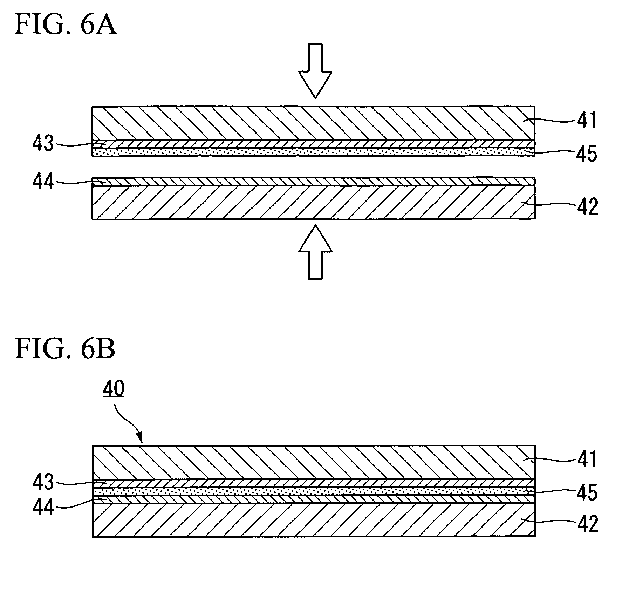

FIG. 6A and FIG 6B are schematic cross-sectional views showing an example of a laminate of a conventional technique. FIG 6A is a schematic cross-sectional view showing a state prior to dry lamination, and FIG. 6B is a schematic cross-sectional view showing a state after the dry lamination.

On one surface of a first substrate film 41, there is formed a surface-modified layer 43 by means of an air corona treatment, and on the surface-modified layer 43, there is laminated an adhesive layer 45. The first substrate film 41 is dry laminated, via the adhesive layer 45, on the surface of the second substrate film 42 having a surface-modified layer 44 formed thereon by means of corona treatment. As a result, there is obtained a laminate 40.

Incidentally, the films used in the laminate of the present invention are: a first substrate film with a thickness of 10-500 µm having a heat-bonding-modified layer formed at least on one surface thereof by means of surface modification performed with use of an atmospheric pressure plasma processor (hereunder, referred to as modification-treated first substrate); a first substrate film with a thickness of 10-500 µm which has been air-corona-treated (hereunder, referred to as air-corona-treated first substrate); a second substrate film with a thickness of 10-500 µm which has been air-corona-treated (hereunder, referred to as air-corona-treated second substrate); and a second substrate film with a thickness of 10-500 µm having a heat-bonding-modified layer formed at least on one surface thereof by means of surface modification performed with use of an atmospheric pressure plasma processor (hereunder, referred to as modification-treated second substrate). There are three combinations of the films that constitute the laminate of the preset invention as listed below.
(1): (Modification-treated first substrate) / (air-corona-treated second substrate)
(2): (Modification-treated first substrate) / (modification-treated second substrate)
(3): (Air-corona-treated first substrate) / (modification-treated second substrate)

Moreover, when using the laminate of the present invention for a packaging container, in order to maintain the flexibility of the laminate and improve the level of processability in production steps of the packaging container, it is preferable that a laminate be produced using a first substrate film and a second substrate film respectively having a thickness of approximately 10-100 µm. Furthermore, for consumers that use the packaging container, the preferred thickness of the laminate used for the packaging container is approximately 30-200 µm in terms of feel and texture of the container.

This kind of laminate can be suitably used for a packaging container. For example, there can be obtained a bag by folding this laminate into two with cast polyethylene (PE) on the inner side serving as a heat seal layer, and hermetically sealing three sides thereof.

Moreover, there can be obtained a standing-pouch type self-standing packaging container by overlapping two laminates cut in predetermined sizes, hermetically sealing both of the side end parts by means of heat sealing, and further hermetically sealing the laminate for the bottom part, which has been folded into two, by means of heat sealing.

Moreover, it is made into a self-standing type standing pouch for a refill packaging container, and furthermore, there can be obtained a packaging container that simplifies content refilling operations by arranging an outlet of various kinds of shapes that facilitate pouring operations.

Furthermore, for an application for an electronic component, a medical component, a medical apparatus component, or a precision machinery component, under an operational environment where the level of cleanness is specially managed, a laminate according to the present invention is produced using substrate films, the cleanness of which is maintained and managed, and then, a clean packaging material, which uses this laminate, can be produced.

The surface modification needs to be performed using an atmospheric pressure plasma processor, so that when the surface of the first substrate film or the second substrate film having a heat-bonding-modified layer formed thereon by means of surface modification performed with use of an atmospheric pressure plasma processor, is provided opposing to the air-corona-treated surface of the thermoplastic resin film that has undergone an air corona treatment, and they are thermocompression-bonded with each other without application of an adhesive or anchor coating agent, the value of the bond strength measured by the method according to JIS K 6854-1 " Adhesive, Separation-Bonding Strength Testing Method, Part 1: 90-Degree separation" is not less than a predetermined value.

The conventional technique describes that as a result of surface modification performed by means of atmospheric pressure plasma treatment, a certain kind of functional group such as a COOH group and OH group is formed on the film surface, and strong bonding can be achieved at a low temperature. However, there are no defined standards or methods for determining the preferred state of the treated film surface which has undergone the plasma treatment.

The present inventors discovered that the bond strength of films laminated by means of thermocompression bonding differs, according to subtle differences in the state of atmospheric pressure plasma treatments. The present inventors also discovered that if the surface of a film which has undergone an atmospheric pressure plasma treatment having a heat-bonding-modified layer formed thereon, and the air-corona-treated surface of a thermoplastic resin film which has undergone an air corona treatment are provided opposing to each other, and they are thermocompression-bonded with each other, it is possible to determine the acceptability of the finished state of surface modification performed with use of an atmospheric pressure plasma processor. As a result, the present invention has been realized.

Moreover, if the surface of the above first substrate film which has undergone the atmospheric pressure plasma treatment having a heat-bonding-modified layer formed thereon, and the surface of the second substrate film which has undergone the atmospheric pressure plasma treatment having a heat-bonding-modified layer formed thereon, are provided opposing to each other, and they are thermocompression-bonded with each other, it is possible to obtain a laminate which can be used for a packaging container.

Furthermore, if the air-corona-treated surface of the first substrate film or the second substrate film which has undergone an air corona treatment, and the surface of the above atmospheric-pressure-plasma-treated second substrate film or first substrate film having a heat-bonding-modified layer formed thereon, are provided opposing to each other, and they are thermocompression-bonded with each other, it is possible to obtain a laminate which can be used for a packaging container.

### (Resin Film)

Resin films which can be used in the present invention are resin films such as polyethylene terephthalate (PET) resin, polyamide (PA) resin, polyethylene naphthalate (PEN) resin, polyacrylonitrile (PAN) resin, polycarbonate (PC) resin, polyimide (PI) resin, cast polyethylene (PE), and cast polypropylene (CPP), which are thermoplastic resins. The melting points of these thermoplastic resins are respectively, polyethylene terephthalate (252°C), polyamide (220°C), polyethylene naphthalate (approximately 270°C), polyacrylonitrile (no melting point), polycarbonate (no melting point), polyimide (no melting point), cast polyethylene (105-140°C), and cast polypropylene (130-165°C). Polyamide resin is known as a linear polymer molecule, in which the main chain thereof is formed with repeated amide linkages produced as a result of acid and amine reacting with each other, and its generally known product name is nylon.

Heat-sealing of the lamination film needs to be performed at a temperature lower than the melting point of the resin to be laminated on the resin serving as the heat-sealing layer. If thermocompression bonding is performed at a temperature higher than the melting point of the resin to be laminated on the resin serving as the heat-sealing layer, the resin becomes attached to the heated roller, and the resin surface becomes roughened. It is preferable that the heat-bonding step be performed with an appropriately selected thermocompression bonding temperature and level of pressure to be applied. The bond strength improves by increasing the temperature, time, and pressure of thermocompression bonding. A condition which enables realization of the target bonding strength may be appropriately selected.

### (Cellophane Film)

In the present invention, a cellophane film may be used instead of the above resin film. In this case, it is preferable that a cellophane film be used for the first substrate, and a resin film serving as a heat-sealing layer such as cast polyethylene (PE) resin and polypropylene (PP) resin be used as the second substrate.

### (Film Thickness)

The preferred thickness of the thermoplastic resin film or the cellophane film to be used in the present invention is 10-500 µm. If the thickness is less than 10 µm, wrinkles are likely to occur and it becomes difficult for roll-to-roll processing to be performed, resulting in handling inconvenience. Moreover, if the thickness exceeds 500 µm, the level of rigidity becomes high and flexibility is lost. Also in this case, as with the case of excessively thin film thickness, it becomes difficult for roll-to-roll processing to be performed, resulting in handling inconvenience. Therefore, when producing a lamination film by laminating the surface-modified films according to the present invention by means of thermocompression bonding, in order to wind the post-lamination film into a roll, it needs to be ensured that the overall thickness does not exceed 500 µm.

Furthermore, if the film thickness after lamination exceeds 500 µm, it becomes difficult for the laminated film to be wound onto a roll. Therefore, it is to be produced as a sheet of lamination film cut in a certain length. Moreover, when using the lamination according to the present invention for a packaging container, the preferred thickness of the film to be used is approximately 10-100 µm in order to maintain flexibility of the laminate and improve the level of processability of the packaging container.

### (Print Layer)

At least on one surface of the first substrate film, there may be formed a print layer. There is no particular restriction on the position of the print layer, and it may be positioned on the surface of the first substrate to be surface-treated, on the surface of the first substrate not to be surface treated, or inside the first substrate. However, particularly in a case where the print layer 3 is provided on the surface-treated surface of the first substrate 5 as shown in FIG. 5A and FIG. 5B, a heat-bonding-modified layer 2 may be formed also on the print layer 3.

In order to form the heat-bonding-modified layer 2 on the print layer 3, the print ink which forms the print layer 3 needs to contain a resin component which can be modified by means of atmospheric pressure plasma treatment. In addition to the thermoplastic resin used for the above substrate film, specific examples of this kind of resin component include various kinds of ink binder resins such as urethane resin and acrylic resin. Furthermore, additive agents such as various kinds of colorant, desiccating agent, and stabilizing agent may be added to the ink.

The print layer is formed, for example, by means of a commonly known printing method such as an offset printing method, a gravure printing method, and a screen printing method. Normally, the thickness of the print layer may be approximately 0.05-2.0 µm.

Moreover, in a case where the occupying area of the print layer is sufficiently small compared to the surface area of the first substrate, it can be laminated on the second substrate even if the heat-bonding-modified layer 2 is not sufficiently formed on the print layer.

### (Laminate Production Method)

As a method of producing a laminate using the present invention, in the case where a second substrate resin film composed of another thermoplastic resin is laminated on the surface of a first substrate film composed of a thermoplastic resin or a cellophane film, lamination can be performed through the following steps (1) to (3). (1) Surface modification is performed on the surface of the first substrate film using an atmospheric pressure plasma processor, to thereby form a heat-bonding-modified layer, or surface modification is performed by means of corona discharge treatment (air corona treatment) performed under an air atmosphere. (2) Surface modification is performed on the surface of the second substrate film using an atmospheric pressure plasma processor, to thereby form a heat-bonding-modified layer, or surface modification is performed by means of corona discharge treatment (air corona treatment) performed under an air atmosphere. (3) The surface of the second film which has undergone the above surface treatment is overlapped on the surface of the first substrate film having the thermal bonding layer, and they are laminated by means of thermocompression bonding without using an adhesive or anchor coating agent.

However, since either one of the first substrate and the second substrate has a surface with a heat-bonding-modified layer formed thereon by means of surface modification performed with use of an atmospheric pressure plasma processor, in the case where a surface treatment is performed on the surface of the first substrate film by means of corona discharge treatment (air corona treatment) under an air atmosphere in (1), a surface treatment is performed on the surface of the second substrate film using an atmospheric pressure plasma processor, to thereby form a heat-bonding-modified layer in (2).

The reactive gas to be used with the atmospheric pressure plasma processor is not limited to a nitrogen gas based gas, and it may be a gas based on oxygen gas or carbon dioxide gas.

In the present invention, the two films to be laminated are laminated with each other using, for example, polyamide (PA) and cast polyethylene (PE) by means of thermocompression bonding without using an adhesive or anchor coating agent, to thereby obtain a laminate. Moreover, in the present invention, as the two films to be laminated, lamination is performed using polyethylene terephthalate (PET) and cast polyethylene (PE) by means of thermocompression bonding without using an adhesive or anchor coating agent, to thereby obtain a laminate. At the present time, in the laminate according to the present invention, a practical bond strength has not been obtained in lamination of polyethylene terephthalate (PET) and cast polyethylene (PE).

Either one of the surface modification treatments to be performed on the two films used for the laminate of the present invention may be performed first as long as it is performed on the previous step of lamination. Moreover, the surface modification treatments on the two films to be laminated may be performed simultaneously or parallelly. Furthermore, in the case of laminating three or more films, a lamination film of three layers or more can be produced by repeating the lamination step and the surface modification treatment on the surface on the side to be laminated the required number of times. Moreover, after having performed the surface modification treatment on both surfaces of the substrate film, by overlapping and laminating another two surface-modified films on each surface of the substrate film, it is possible to produce a three-layer lamination film in which another film is laminated on each of both surfaces of the substrate film. At the present time, in the laminate according to the present invention, a practical bond strength has not been obtained in lamination of polyethylene terephthalate (PET) and cast polyethylene (PE).

### (Corona Discharge Treatment)

Thermoplastic polyolefin resins such as polyethylene and polypropylene do not have a polar group on the surface layer thereof, and therefore, the levels of its ink printability and its bondability with respect to another resin are low. Therefore, in order to increase the levels of its ink printability and its bondability with respect to another resin, surface modification of a resin film is performed by means of corona discharge treatment. In a surface modification performed by means of corona discharge, corona discharge is generated in the air atmosphere using a high-frequency power supply voltage, and electrons and ions that occur as a result of this are irradiated on the surface of a resin film. Further, functional groups are added onto the resin film surface to thereby perform surface modification on the resin film.

### (Corona Discharge Treatment under Air Atmosphere (Air Corona Treatment))

In a normal surface modification treatment by means of corona discharge to be performed under an air atmosphere, the corona-discharge treated resin film surface is oxidized, and on the surface of the resin film, oxygen functional groups such as a carbonyl group (>CO) and carboxyl group (-COOH) are primarily formed on the main chain and the side chain of the macromolecule.

### (Corona Discharge Treatment under Nitrogen Gas Atmosphere)

It is considered that as a result of performing a corona discharge treatment under a nitrogen gas atmosphere, nitrogen functional groups such as an amino group (-NH2), which are considered to contribute to bonding, are primarily generated on the main chain and the side chain of the macromolecule on the resin film surface. Furthermore, unlike a normal corona discharge treatment under an air atmosphere (air corona treatment), in a corona discharge treatment performed under a nitrogen gas atmosphere, discharging occurs within the nitrogen gas atmosphere, and therefore, it is possible to suppress the occurrence of fragile layers which occur due to impurities in the air when performing a corona discharge treatment under an air atmosphere (air corona treatment). Some Patent Documents describe that nitrogen gas can be used as atmospheric gas for an atmospheric pressure plasma treatment. However, in the results of the discharge state observation, it is not atmospheric pressure glow plasma discharging. However, corona discharging observed under a nitrogen gas atmosphere is thunder-lightening-like streamer form (linear form) discharging due to the discharge condition adjustment. That is to say, discharging that is gentler (milder) than corona discharging under air atmosphere and that is similar to glow plasma discharging is possible, and therefore, it can be used as a means for more uniform surface modification compared to an air corona treatment.

### (Atmosphere Glow Plasma Treatment)

Conventionally, a low-temperature plasma treatment is used for surface modification, in which discharge is performed in a vacuum atmosphere. However, this has a disadvantage in that the operation becomes complicated. Therefore, for the sake of convenience for improving the level of wetness property and bonding property of resin films, there is used an atmospheric pressure plasma processor capable of generating a glow discharge state, which normally occurs only in a vacuum atmosphere, under an atmospheric pressure environment to thereby perform surface modification using reaction radicals and electrons produced as a result of discharging.

In an atmospheric pressure glow plasma treatment, by using a noble gas element such as helium and argon as an atmospheric gas, stable glow discharge is maintained and thunder-lightening-like streamer form (linear form) discharge is obtained. That is to say, it is possible to achieve more even and uniform surface modification compared to a corona discharge performed under an air atmosphere. Some Patent Documents describe that nitrogen gas can be used as atmospheric gas for an atmospheric pressure plasma treatment. However, in the results of the discharge state observation, it is not atmospheric pressure glow plasma discharging.

The atmospheric pressure plasma treatment in the present invention refers to a corona discharge treatment to be performed under a nitrogen gas atmosphere or an atmospheric pressure glow plasma treatment to be performed under a noble gas atmosphere such as helium and argon.

In an atmospheric pressure plasma treatment which uses oxygen as a reaction gas, on the resin surface, oxygen functional groups such as a carbonyl group (>CO) and carboxyl group (-COOH) are primarily formed on the main chain and the side chain of the macromolecule. The present inventors also confirmed that by mixing a nitrogen-based reactive gas such as N2, N2O, and NH3, and further, by mixing hydrogen (H2) and oxygen (02), it is possible to intentionally introduce an amino group, amide group, and so forth.

Moreover, CH4, CO2, or the like may be added to the reactive gas.

Taking these into consideration, in the present invention, when performing a surface modification treatment on the film surface with use of an atmospheric pressure plasma treatment, the surface modification is performed using a corona discharge treatment under a nitrogen gas atmosphere, or an atmospheric pressure glow plasma treatment under a noble gas atmosphere such as helium and argon.

Furthermore, in the present invention, in order to ensure formation of a heat-bonding-modified layer on the film surface, in the atmospheric pressure plasma treatment, the treatment is performed while adjusting time, applied electric power, and frequency for irradiating plasma generated by the atmospheric pressure plasma processor onto the film surface.

In the atmospheric pressure plasma treatment, for example, in order to find the conditions for a plasma treatment to be performed on a polyamide (PA) resin, treatment conditions such as time, applied electric power, and frequency for plasma irradiation onto the film surface may be determined by investigating the treatment conditions that have realized surface modification with use of an atmospheric pressure plasma processor, so that when the surface of the PA resin film having a heat-bonding-modified layer formed thereon and the air-corona-treated surface of an air-corona-treated cast polyethylene (PE) resin film (cast polyethylene film, product name: SK615P, manufactured by Tamapoly Co., Ltd.) are provided opposing to each other and they are thermocompression-bonded with each other while being held for 10 seconds at a temperature of 160°C and with a pressure level of 0.4 MPa without application of an adhesive or anchor coating agent, the bond strength is at least 9.8N/25.4 mm as the strength at the time of performing separation at a velocity of 5 mm/min measured by the method according to JIS K 6854-1 " Adhesive, Separation-Bonding Strength Testing Method, Part 1: 90-Degree separation".

Moreover, in order to find the conditions for a plasma treatment to be performed on a cast polyethylene (PE) resin, the conditions may be determined by investigating the treatment conditions that have realized surface modification with use of an atmospheric pressure plasma processor, so that when the surface of the PE resin film having a heat-bonding-modified layer formed thereon and the air-corona-treated surface of an air-corona-treated polyethylene terephthalate (PET) resin film (biaxially stretched polyethylene terephthalate film, product name: E5102, manufactured by Toyobo Co., Ltd.) are provided opposing to each other and they are thermocompression-bonded with each other while being held for 10 seconds at a temperature of 160°C and with a pressure level of 0.4 MPa without application of an adhesive or anchor coating agent, the bond strength is at least 5.9N/25.4 mm as the strength at the time of performing separation at a velocity of 5 mm/min measured by the method according to JIS K 6854-1 " Adhesive, Separation-Bonding Strength Testing Method, Part 1: 90-Degree separation".

Furthermore, in order to find the conditions for a plasma treatment to be performed on a polyethylene terephthalate (PET) resin, the conditions may be determined by investigating the treatment conditions that have realized surface modification with use of an atmospheric pressure plasma processor, so that when the surface of the PET resin film having a heat-bonding-modified layer formed thereon and the air-corona-treated surface of an air-corona-treated cast polyethylene (PE) resin film (cast polyethylene film, product name: SK615P, manufactured by Tamapoly Co., Ltd.) are provided opposing to each other and they are thermocompression-bonded with each other while being held for 10 seconds at a temperature of 160°C and with a pressure level of 0.4 MPa without application of an adhesive or anchor coating agent, the bond strength is at least 5.9N/25.4 mm as the strength at the time of performing separation at a velocity of 5 mm/min measured by the method according to JIS K 6854-1 " Adhesive, Separation-Bonding Strength Testing Method, Part 1: 90-Degree separation".

Moreover, in order to find the conditions for a plasma treatment to be performed on a cast polypropylene (CPP) resin, the conditions may be determined by investigating the treatment conditions that have realized surface modification with use of an atmospheric pressure plasma processor, so that when the surface of the CPP resin film having a heat-bonding-modified layer formed thereon and the air-corona-treated surface of an air-corona-treated polyethylene terephthalate (PET) resin film (biaxially stretched polyethylene terephthalate, product name: E5102, manufactured by Toyobo Co., Ltd.) are provided opposing to each other and they are thermocompression-bonded with each other while being held for 10 seconds at a temperature of 190°C and with a pressure level of 0.4 MPa without application of an adhesive or anchor coating agent, the bond strength is at least 5.9N/25.4 mm as the strength at the time of performing separation at a velocity of 5 mm/min measured by the method according to JIS K 6854-1 " Adhesive, Separation-Bonding Strength Testing Method, Part 1: 90-Degree separation".

Furthermore, in order to find the conditions for a plasma treatment to be performed on a cellophane film, the conditions may be determined by investigating the treatment conditions that have realized surface modification with use of an atmospheric pressure plasma processor, so that when the surface of the cellophane film having a heat-bonding-modified layer formed thereon and the air-corona-treated surface of an air-corona-treated cast polyethylene (PE) resin film (cast polyethylene film, product name: SK615P, manufactured by Tamapoly Co., Ltd.) are provided opposing to each other and they are thermocompression-bonded with each other while being held for 10 seconds at a temperature of 160°C and with a pressure level of 0.4 MPa without application of an adhesive or anchor coating agent, the bond strength is at least 2.0N/25.4 mm as the strength at the time of performing separation at a velocity of 5 mm/min measured by the method according to JIS K 6854-1 " Adhesive, Separation-Bonding Strength Testing Method, Part 1: 90-Degree separation".

Moreover, also in the case of finding treatment conditions of a plasma treatment to be performed on other kinds of thermoplastic resin film such as polyethylene naphthalate (PEN) resin, polyacrylonitrile (PAN) resin, polycarbonate (PC) resin, and polyimide (PI) resin, the treatment conditions may be determined by measuring the bond strength by means of a similar method and investigating the conditions with use of an atmospheric pressure plasma processor.

### (Aging Treatment)

The present invention preferably includes an aging step in which after the lamination step, the laminate is left at rest for 10 days to 1 month at room temperature, or for 1 to 3 days at 40-60°C. As a result, the bond strength can be increased.

Hereunder, the present invention is specifically described, with reference to Examples.

### (Measuring Apparatus, Measuring Method)

The experiment conducted in order to verify the effect of the present invention was carried out using the following measuring apparatus and measuring method.
- Treatment conditions of atmospheric pressure plasma treatment
   Frequency: 3 KHz - 13.56 MHz
   Irradiation time: 0.001-10 seconds
   Distance between electrodes: 1-4 mm

Since electric power to be applied depends on the scale of the apparatus, values of applied electric power shown in the following example should be understood as being referential values for illustrating strong/weak levels relatively, rather than as being absolute mathematical values.

- Measuring bonding (separation) strength: Measurements were carried out in accordance with the measuring method according to JIS K 6854-1 " Adhesive, Separation-Bonding Strength Testing Method, Part 1: 90-Degree separation".
- Measuring heat-sealing strength: Measurements were carried out in accordance with the measuring method according to JIS Z 0238 "Testing methods for heat sealed flexible packages and semirigid containers, 7. Package heat-sealing test".
- Measuring tensile strength and tensile elongation: Measurements were carried out in accordance with the measuring method according to JIS K 7127 "Plastic, testing method for tensile characteristics".
- Measuring falling strength: Measurements were carried out in accordance with the measuring method according to JIS Z 0238 "Testing methods for heat sealed flexible packages and semirigid containers, 9. Falling strength test". The test was carried out where a bag was filled with 200 ml of water, dropping height was 1.2 m, and the initial temperature/testing environment was 5°C. The bag was dropped 30 times respectively in the horizontal direction and then in the vertical direction.
- Measuring piercing strength: Measurements were carried out in accordance with the measuring method according to JIS Z 1707 "General rules of plastic films for food packaging, 7.4 Piercing strength test".
- Gelvo type flex tester test: Measurements were carried out in accordance with the measuring method according to MIL-B-131G.
- Boiling test and retorting test: Tests were carried out with a four-sided bag (130 mm × 170 mm) filled with 200 ml of water, which was processed under a boiling condition of 97°C × 40 min and retorting condition of 121°C × 30 min, and then the external appearance of the laminate was evaluated.
- Content resistance fitness test: Tests were carried out with a content that deteriorates the performance of the adhesive and anchor coating agent where a four-sided bag (130 mm × 170 mm) was filled with 200 ml of the content, and it was left at rest for a predetermined number of days (kept for a month at 50°C). Then, the bonding strength of the laminate was evaluated.

### (Verifying the Acceptability of Heat-bonding-modified Layer)

In producing the laminate of the present invention, first, surface modification was performed on various kinds of films, using an atmospheric pressure plasma processor, and then, a substrate, the acceptability of the heat-bonding-modified layer of which had been verified, was prepared.

Here, using a substrate, A having a heat-bonding-modified layer formed thereon and an air-corona-treated substrate B of a type that differs from that of the substrate A, the surface of the substrate A having the heat-bonding-modified layer formed thereon and the air-corona-treated surface of the substrate B were provided opposing to each other, and they were thermocompression-bonded with each other without using a adhesive or anchor coating agent, to thereby obtain a sample laminate. Then, the bond strength on the lamination surface of the sample laminate was measured, and thereby the acceptability of the heat-bonding-modified layer of the substrate A may be verified.

If the bond strength in the bonding surface of the sample laminate of the substrate A takes a low value, defects may occur in the case of producing a laminate of the present invention using this substrate A. For example, in the case where a packaging container was produced with use of the laminate that uses the substrate A, separation from the lamination surface of the laminate may occur or it may not withstand a dropping impact and be damaged, making it difficult for a practical laminate to be produced.

Therefore, in order to perform the laminate production method according to the present invention, it is necessary to preliminarily verify, using the atmospheric pressure plasma processor to be used, whether or not the formation state of the heat-bonding-modified layer of the substrate A having the heat-bonding-modified layer formed thereon by means of surface modification, is appropriate.

It is possible to determine whether or not the formation state of the heat-bonding-modified layer is appropriate in a manner such that by using an air-corona-treated substrate B of a type that differs from that of the substrate A, the surface of the substrate A having the heat-bonding-modified layer formed thereon and the air-corona-treated surface of the substrate B are provided opposing to each other, and they are thermocompression-bonded with each other without using an adhesive or anchor coating agent, to thereby obtain a sample laminate. Then, whether or not the bond strength on the lamination surface of the sample laminate exceeds a predetermined value may be determined.

### (Surface Modification Example 1 by Atmospheric Pressure Plasma Treatment)

Surface modification was performed on a polyamide (PA) resin film, using an atmospheric pressure plasma processor. The treatment conditions were as follows. Irradiation time: 0.12s, applied electric power: 1.0 kW, and Frequency: 20 KHz.

Using a polyamide (PA) resin film with a thickness of 15 µm (biaxially stretched polyamide film, product name: BONYL RX, manufactured by Kohjin Co., Ltd.), a surface modification treatment was performed by means of atmospheric pressure plasma treatment, and a surface-modified polyamide (PA) resin film of Surface Modification Example 1 was obtained.

Next, the surface of the polyamide (PA) resin film of Surface Modification Example 1 having a heat-bonding-modified layer formed thereon, and the air-corona-treated surface of a commercially available air-corona-treated cast polyethylene (PE) resin film (cast polyethylene film, product name: SK615P, manufactured by Tamapoly Co., Ltd.) were provided opposing to each other, and they were thermocompression-bonded with each other while being held for 10 seconds at a temperature of 160°C and with a pressure level of 0.4 MPa without application of an adhesive or anchor coating agent, to thereby obtain a sample laminate of Surface Modification Example 1. The bond strength between the laminated films in the obtained sample laminate of Surface Modification Example 1 was measured, and the result of the separation strength measurement was 22.5 N/25.4 mm.

### (Surface Modification Example 2 by Atmospheric Pressure Plasma Treatment)

The same operations as those of Surface Modification Example 1 were performed except the irradiation time, applied electric power, and frequency of atmospheric pressure plasma with the atmospheric pressure plasma processor were changed to weaker values, and a surface-modified polyamide (PA) resin film of Surface-modified Example 2 was obtained. The treatment conditions were as follows. Irradiation time: 0.10s, applied electric power: 20W, and Frequency: 13.56 MHz.

Next, using the obtained resin film of Surface Modification Example 2, it was laminated with the same air-corona-treated cast polyethylene (PE) resin film as that of Surface Modification Example 1, under the same conditions as those of Surface Modification Example 1, to thereby obtain a sample laminate of Surface Modification Example 2. The measured value of the separation strength of the obtained sample laminate of Surface Modification Example 2 was 7.8 N/ 25.4 mm.

### (Surface Modification Example 3 by Atmospheric Pressure Plasma Treatment)

Surface modification was performed on a cast polyethylene (PE) resin film, using an atmospheric pressure plasma processor. The treatment conditions were as follows. Irradiation time: 0.05 s, applied electric power: 10W, and Frequency: 13.56 MHz.

Using a cast polyethylene (PE) resin film with a thickness of 100 µm (cast polyethylene film, product name: SK615P, manufactured by Tamapoly Co., Ltd.), a surface modification treatment was performed by means of atmospheric pressure plasma treatment, and a surface-modified cast polyethylene (PE) resin film of Surface Modification Example 3 was obtained.

Next, the surface of the resin film of Surface Modification Example 3 having a heat-bonding-modified layer formed thereon, and the air-corona-treated surface of a commercially available air-corona-treated polyethylene terephthalate (PET) resin film (biaxially stretched polyethylene terephthalate film, product name: E5102, manufactured by Toyobo Co., Ltd.) were provided opposing to each other, and they were laminated under the same conditions as those of Surface Modification Example 1 without application of an adhesive or anchor coating agent, to thereby obtain a laminate of Surface Modification Example 3. The measured value of the separation strength of the obtained sample laminate of Surface Modification Example 3 was 8.0 N/ 25.4 mm.

### (Surface Modification Example 4 by Atmospheric Pressure Plasma Treatment)

The same operations as those of Surface Modification Example 3 were performed except the irradiation time, applied electric power, and frequency of atmospheric pressure plasma with the atmospheric pressure plasma processor were changed to weaker values, and a surface-modified cast polyethylene (PE) resin film of Surface-modified Example 4 was obtained. The treatment conditions were as follows. Irradiation time: 0.05 s, applied electric power: 20W, and Frequency: 13.56 MHz.

Next, using the obtained resin film of Surface Modification Example 4, it was laminated with the same air-corona-treated polyethylene terephthalate (PET) resin film as that of Surface Modification Example 3, under the same conditions as those of Surface Modification Example 1, to thereby obtain a sample laminate of Surface Modification Example 4. The measured value of the separation strength of the obtained sample laminate of Surface Modification Example 4 was 2.5 N/ 25.4 mm.

### (Surface Modification Example 5 by Atmospheric Pressure Plasma Treatment)

Surface modification was performed on a polyethylene terephthalate (PET) resin film, using an atmospheric pressure plasma processor. The treatment conditions were as follows. Irradiation time: 0.05 s, applied electric power: 10W, and Frequency: 13.56 MHz.

Using a polyethylene terephthalate (PET) resin film with a thickness of 12 µm (biaxially stretched polyethylene terephthalate film, product name: E5102, manufactured by Toyobo Co., Ltd.), a surface modification treatment was performed by means of atmospheric pressure plasma treatment, and a surface-modified polyethylene terephthalate (PET) resin film of Surface Modification Example 5 was obtained.

Next, the surface of the resin film of Surface Modification Example 5 having a heat-bonding-modified layer formed thereon, and the air-corona-treated surface of a commercially available air-corona-treated cast polyethylene (PE) resin film (cast polyethylene film, product name: SK615P, manufactured by Tamapoly Co., Ltd.) were provided opposing to each other, and they were laminated under the same conditions as those of Surface Modification Example 1 without application of an adhesive or anchor coating agent, to thereby obtain a sample laminate of Surface Modification Example 5. The measured value of the separation strength of the obtained sample laminate of Surface Modification Example 5 was 7.9 N/ 25.4 mm.

### (Surface Modification Example 6 by Atmospheric Pressure Plasma Treatment)

The same operations as those of Surface Modification Example 5 were performed except the irradiation time, applied electric power, and frequency of atmospheric pressure plasma with the atmospheric pressure plasma processor were changed to weaker values, and a surface-modified polyethylene terephthalate (PET) resin film of Surface-modified Example 6 was obtained. The treatment conditions were as follows. Irradiation time: 0.01 s, applied electric power: 10W, and Frequency: 13.56 MHz.

Next, using the obtained resin film of Surface Modification Example 6, it was laminated with a commercially available air-corona-treated cast polyethylene (PE) resin film under the same conditions as those of Surface Modification Example 5, to thereby obtain a sample laminate of Surface Modification Example 6. The measured value of the separation strength of the obtained sample laminate of Surface Modification Example 6 was 3.9 N/ 25.4 mm.

### (Surface Modification Example 7 by Atmospheric Pressure Plasma Treatment)

Surface modification was performed on a cast polypropylene (CPP) resin film, using an atmospheric pressure plasma processor. The treatment conditions were as follows. Irradiation time: 0.27 s, applied electric power: 2.2 kW, and Frequency: 40 KHz.

Using a cast polypropylene (CPP) resin film with a thickness of 60 µm (cast polypropylene film, product name: PYLEN P1146, manufactured by Toyobo Co., Ltd.), a surface modification treatment was performed by means of atmospheric pressure plasma treatment, and a surface-modified polypropylene (CPP) resin film of Surface Modification Example 7 was obtained.

Next, the surface of the resin film of Surface Modification Example 7 having a heat-bonding-modified layer formed thereon, and the air-corona-treated surface of a commercially available air-corona-treated polyethylene terephthalate (PET) resin film (biaxially stretched polyethylene terephthalate film, product name: E5102, manufactured by Toyobo Co., Ltd.) with a thickness of 12 µm were provided opposing to each other, and they were laminated under the same conditions as those of Surface Modification Example 1 without application of an adhesive or anchor coating agent, to thereby obtain a sample laminate of Surface Modification Example 7. The measured value of the separation strength of the obtained sample laminate of Surface Modification Example 7 was 16.4 N/ 25.4 mm.

### (Surface Modification Example 8 by Atmospheric Pressure Plasma Treatment)

The same operations as those of Surface Modification Example 7 were performed except the irradiation time, applied electric power, and frequency of atmospheric pressure plasma with the atmospheric pressure plasma processor were changed to weaker values, and a surface-modified cast polypropylene (CPP) resin film of Surface-modified Example 8 was obtained. The treatment conditions were as follows. Irradiation time: 0.12 s, applied electric power: 1.0 kW, and Frequency: 20 KHz.

Next, using the obtained resin film of Surface Modification Example 8, it was laminated with a commercially available air-corona-treated polyethylene terephthalate (PET) resin film under the same conditions as those of Surface Modification Example 7, to thereby obtain a laminate of Surface Modification Example 8. The measured value of the separation strength of the obtained sample laminate of Surface Modification Example 8 was 0.2 N/ 25.4 mm.

### (Surface Modification Example 9 by Atmospheric Pressure Plasma Treatment)

Surface modification was performed on a cellophane film, using an atmospheric pressure plasma processor. The treatment conditions were as follows. Irradiation time: 0.15 s, applied electric power: 1.2 kW, and Frequency: 30 KHz.

Using a cellophane film of thickness #300 cellophane film, product name: TAIKO PF-3, manufactured by Futamura Chemicals Co., Ltd.), a surface modification treatment was performed thereon using an atmospheric pressure plasma processor, to thereby obtain a surface-modified cellophane film of Surface Modification Example 9.

Next, the surface of the film of Surface Modification Example 9 having a heat-bonding-modified layer formed thereon, and the air-corona-treated surface of a commercially available air-corona-treated cast polyethylene (PE) resin film (cast polyethylene film, product name: SK615P, manufactured by Tamapoly Co., Ltd.) were provided opposing to each other, and they were laminated under the same conditions as those of Surface Modification Example 1 without application of an adhesive or anchor coating agent, to thereby obtain a sample laminate of Surface Modification Example 9. The measured value of the separation strength of the obtained sample laminate of Surface Modification Example 9 was 2.3 N/ 25.4 mm.

### (Surface Modification Example 10 by Atmospheric Pressure Plasma Treatment)

The same operations as those of Surface Modification Example 9 were performed except the irradiation time, applied electric power, and frequency of atmospheric pressure plasma with the atmospheric pressure plasma processor were changed to weaker values, and a surface-modified cellophane film of the Surface-modified Example 10 was obtained. The treatment conditions were as follows. Irradiation time: 0.15 s, applied electric power: 300W, and Frequency: 10 KHz.

Next, using the obtained film of Surface Modification Example 10, it was laminated with a commercially available air-corona-treated cast polyethylene (PE) resin film under the same conditions as those of Surface Modification Example 9, to thereby obtain a laminate of Surface Modification Example 10. The measured value of the separation strength of the obtained sample laminate of Surface Modification Example 10 was 1.3 N/ 25.4 mm.

As shown above, surface modification was performed on the surface of various kinds of films using an atmospheric pressure plasma processor, to obtain surface-modified films of Surface Modification Examples 1 to 10. The obtained heat-bonding-modified layer of Surface Modification Examples 1 to 10 was laminated with an air-corona-treated resin film by means of thermocompression bonding, to thereby obtain sample laminates of Surface Modification Examples 1 to 10.

Table 1 shows the results of measured separation strengths of the lamination film of the obtained sample laminates of Surface Modification Examples 1 to 10.

**[Table 1]**

| | Film surface-modified by atmospheric pressure plasma treatment | Resin film to be laminated | Separation strength of sample laminate |
|---|---|---|---|
| Surface Modification Example 1 | PA | Air-corona-treated PE | 22.5 N/25.4 mm |
| Surface Modification Example 2 | PA | Air-corona-treated PE | 7.8 N/25.4 mm |
| Surface Modification Example 3 | PE | Air-corona-treated PET | 8.0 N/25.4 mm |
| Surface Modification Example 4 | PE | Air-corona-treated PET | 2.5 N/25.4 mm |
| Surface Modification Example 5 | PET | Air-corona-treated PE | 7.9 N/25.4 mm |
| Surface Modification Example 6 | PET | Air-corona-treated PE | 3.9 N/25.4 mm |
| Surface Modification Example 7 | CPP | Air-corona-treated PET | 16.4 N/25.4 mm |
| Surface Modification Example 8 | CPP | Air-corona-treated PET | 0.2 N/25.4 mm |
| Surface Modification Example 9 | Cellophane | Air-corona-treated PE | 2.3 N/25.4 mm |
| Surface Modification Example 10 | Cellophane | Air-corona-treated PE | 1.3 N/25.4 mm |

Next, the obtained surface-modified film of Surface Modification Examples 1 to 10 and the air-corona-treated thermoplastic resin film were laminated only by means of thermocompression bonding without using an adhesive or anchor coating agent, to thereby produce laminates of Examples 1 to 5 and Comparative Examples 1 to 5.

Moreover, using the obtained surface-modified films of Surface Modification Examples 1 to 4, lamination was performed only by means of thermocompression bonding without using a adhesive or anchor coating agent, to thereby produce laminates of Example 6 and Comparative Example 6.

Furthermore, in order to make a comparison with the laminate produced by the present invention, lamination of the conventional technique was performed by means of a dry lamination method, to thereby produce a laminate of Comparative Example 7.

Moreover, a packaging container of the standing pouch type was produced in Examples 1 and 6 and Comparative Examples 1, 6, and 7. Moreover, a four-sided bag type packaging container was produced in Examples 1 to 6 and Comparative Examples 1 to 7.

### (Example 1)

The surface of the polyamide (PA) resin film of the above Surface Modification Example 1 having a heat-bonding-modified layer formed thereon, and the air-corona-treated surface of a commercially available air-corona-treated cast polyethylene (PE) resin film (cast polyethylene film, product name: SK615P, manufactured by Tamapoly Co., Ltd.) were provided opposing to each other, and they were thermocompression-bonded with each other using a heated roller at a velocity and temperature of 5m/min and 150°C and with a pressure level of 0.23 MPa without application of an adhesive or anchor coating agent, to thereby obtain a laminate of Example 1. The measured value of the separation strength of the obtained laminate of Example 1 was 15.1 N/ 25.4 mm. Moreover, a packaging container of the standing pouch type and the four-sided sealed bag type were produced using the obtained laminate of Example 1, and then, various tests related to the packaging containers were conducted.

### (Comparative Example 1)

Using the surface of the polyamide (PA) resin film of the above Surface Modification Example 2 having the heat-bonding-modified layer formed thereon, and the air-corona-treated cast polyethylene (PE) resin film of Example 1, heat lamination was performed under the same conditions as those of Example 1, and a laminate of Comparative Example 1 was obtained. The measured value of the separation strength of the obtained laminate of Comparative Example 1 was 6.7 N/ 25.4 mm. Moreover, a packaging container of the standing pouch type and the four-sided sealed bag type were produced using the obtained laminate of Comparative Example 1, and then, various tests related to the packaging containers were conducted.

### (Example 2)

Using the surface of the cast polyethylene (PE) resin film of the above Surface Modification Example 3 having the heat-bonding-modified layer formed thereon, and a commercially available air-corona-treated polyethylene terephthalate (PET) resin film (biaxially stretched polyethylene terephthalate film, product name: E5102, manufactured by Toyobo Co., Ltd.), heat lamination was performed under the same conditions as those of Example 1, to thereby obtain a laminate of Example 2. The measured value of the separation strength of the obtained laminate of Example 2 was 7.8 N/ 25.4 mm. Moreover, a packaging container of the four-sided sealed bag type was produced using the obtained laminate of Example 2, and then, various tests related to the packaging container were conducted.

### (Comparative Example 2)

Using the surface of the cast polyethylene (PE) resin film of the above Surface Modification Example 4 having the heat-bonding-modified layer formed thereon, and the air-corona-treated polyethylene terephthalate (PET) resin film of Example 2, heat lamination was performed under the same conditions as those of Example 1, to thereby obtain a laminate of Comparative Example 2. The measured value of the separation strength of the obtained laminate of Comparative Example 2 was 2.4 N/ 25.4 mm. Moreover, a packaging container of the four-sided sealed bag type was produced using the obtained laminate of Comparative Example 2, and then, various tests related to the packaging container were conducted.

### (Example 3)

Using the surface of the polyethylene terephthalate (PET) resin film of the above Surface Modification Example 5 having the heat-bonding-modified layer formed thereon, and a commercially available air-corona-treated cast polyethylene (PE) resin film (cast polyethylene film, product name: SK615P, manufactured by Tamapoly Co., Ltd.), heat lamination was performed under the same conditions as those of Example 1, to thereby obtain a laminate of Example 3. The measured value of the separation strength of the obtained laminate of Example 3 was 8.0 N/ 25.4 mm. Moreover, a packaging container of the four-sided sealed bag type was produced using the obtained laminate of Example 3, and then, various tests related to the packaging container were conducted.

### (Comparative Example 3)

Using the surface of the polyethylene terephthalate (PET) resin film of the above Surface Modification Example 6 having the heat-bonding-modified layer formed thereon, and the air-corona-treated cast polyethylene (PE) resin film of Example 3, heat lamination was performed under the same conditions as those of Example 1, and a laminate of Comparative Example 3 was obtained. The measured value of the separation strength of the obtained laminate of Comparative Example 3 was 2.4 N/ 25.4 mm. Moreover, a packaging container of the four-sided sealed bag type was produced using the obtained laminate of Comparative Example 3, and then, various tests related to the packaging container were conducted.

### (Example 4)

Using the surface of the cast polypropylene (CPP) resin film of the above Surface Modification Example 7 having a heat-bonding-modified layer formed thereon, and the air-corona-treated surface of a commercially available air-corona-treated cast polyethylene (PE) resin film (biaxially stretched polyethylene terephthalate film, product name: E5102, manufactured by Toyobo Co., Ltd.), they were thermocompression-bonded with each other using a heated roller at a velocity and temperature of 5m/min and 185°C and with a pressure level of 0.23 MPa without application of an adhesive or anchor coating agent, to thereby obtain a laminate of Example 4. The measured value of the separation strength of the obtained laminate of Example 4 was 12.8 N/ 25.4 mm. Moreover, a packaging container of the four-sided sealed bag type was produced using the obtained laminate of Example 4, and then, various tests related to the packaging container were conducted.

### (Comparative Example 4)

Using the surface of the cast polypropylene (CPP) resin film of the above Surface Modification Example 8 having the heat-bonding-modified layer formed thereon, and the air-corona-treated polyethylene terephthalate (PET) resin film of Example 4, heat lamination was performed under the same conditions as those of Example 4, to thereby obtain a laminate of Comparative Example 4. The measured value of the separation strength of the obtained laminate of Comparative Example 4 was 0.3 N/ 25.4 mm. Moreover, a packaging container of the four-sided sealed bag type was produced using the obtained laminate of Comparative Example 4, and then, various tests related to the packaging container were conducted.

### (Example 5)

Using the surface of the cellophane film of the above Surface Modification Example 9 having the heat-bonding-modified layer formed thereon, and a commercially available air-corona-treated cast polyethylene (PE) resin film (cast polyethylene film, product name: SK615P, manufactured by Tamapoly Co., Ltd.), heat lamination was performed under the same conditions as those of Example 1, to thereby obtain a laminate of Example 5. The measured value of the separation strength of the obtained laminate of Example 5 was 2.5 N/ 25.4 mm. Moreover, a packaging container of the four-sided sealed bag type was produced using the obtained laminate of Example 5, and then, various tests related to the packaging container were conducted.

### (Comparative Example 5)

Using the surface of the cellophane film of the above Surface Modification Example 10 having the heat-bonding-modified layer formed thereon, and the air-corona-treated cast polyethylene (PE) resin film of Example 5, heat lamination was performed under the same conditions as those of Example 1, and a laminate of Comparative Example 5 was obtained. The measured value of the separation strength of the obtained laminate of Comparative Example 5 was 1.0 N/ 25.4 mm. Moreover, a packaging container of the four-sided sealed bag type was produced using the obtained laminate of Comparative Example 5, and then, various tests related to the packaging container were conducted.

### (Example 6)

Using the surface of the polyamide (PA) resin film of the above Surface Modification Example 1 having the heat-bonding-modified layer formed thereon, and the surface-modified cast polyethylene (PE) resin film of Surface Modification Example 3, heat lamination was performed under the same conditions as those of Example 1, and a laminate of Comparative Example 3 was obtained. The measured value of the separation strength of the obtained laminate of Example 6 was 16.7 N/ 25.4 mm.

Moreover, a packaging container of the standing pouch type and the four-sided sealed bag type were produced using the obtained laminate of Example 6, and then, various tests related to the packaging containers were conducted.

### (Comparative Example 6)

Using the surface of the polyamide (PA) resin film of the above Surface Modification Example 2 having the heat-bonding-modified layer formed thereon, and the surface-modified cast polyethylene (PE) resin film of Surface Modification Example 4, heat lamination was performed under the same conditions as those of Example 1, and a laminate of Comparative Example 6 was obtained. The measured value of the separation strength of the obtained laminate of Comparative Example 6 was 6.4 N/ 25.4 mm. Moreover, a packaging container of the standing pouch type and the four-sided sealed bag type were produced using the obtained laminate of Comparative Example 6, and then, various tests related to the packaging containers were conducted.

### (Comparative Example 7)

An air-corona-treated polyamide (PA) resin film and an air-corona-treated cast polyethylene (PE) resin film were dry-laminated by means of a conventional technique, using an adhesive, to thereby obtain a laminate. Then, a packaging container of the standing pouch type and the four-sided sealed bag type were produced using this laminate.

The air-corona-treated surface of a commercially available polyamide (PA) resin film with a thickness of 15 µm (biaxially stretched polyamide film, product name: BONYL RX, manufactured by Kohjin Co., Ltd.), and the air-corona-treated surface of a commercially available air-corona-treated cast polyethylene (PE) resin film (cast polyethylene film, product name: SK615P, manufactured by Tamapoly Co., Ltd.) were provided opposing to each other, and an adhesive was applied thereon. Subsequently, they were compression bonded with each other using a press roller, and were subjected to an aging step, to thereby obtain a laminate of Comparative Example 7. The measured value of the separation strength of the obtained laminate of Comparative Example 7 was 12.2 N/ 25.4 mm. Moreover, a packaging container of the standing pouch type and the four-sided sealed bag type were produced using the obtained laminate of Comparative Example 7, and then, various tests related to the packaging containers were conducted.

A packaging container of the standing pouch type and the four-sided sealed bag type were produced using the obtained laminates of Examples 1 to 6 and Comparative Examples 1 to 7, and then, various tests related to the packaging containers were conducted. Table 2 shows the obtained test results.

| Laminate used | Separation strength of laminate | Heat-sealing strength | Tensile strength MD | Tensile strength TD | Tensile elongation MD | Tensile elongation TD | Falling strength | Piercing strength (from front/from back) | Gelvo flex tester test | Acceptability of packaging container |
|---|---|---|---|---|---|---|---|---|---|---|
| | N/25.4 mm | N/15 mm | N/15 mm | N/15 mm | % | % | | N | Number per 1,000 | |
| Example 1 | 15.1 | 79.4 | 84.3 | 75.5 | 103 | 120 | 1.2 m, 30 times, no breakage | 13.7/12.7 | 1 | ○ |
| Example 2 | 7.8 | 51.0 | 52.9 | 60.8 | 120 | 84 | 1.2 m, 30 times, no breakage | 10.8/9.8 | 1 | ○ |
| Example 3 | 8.0 | 53.9 | 53.9 | 62.7 | 120 | 86 | 1.2 m, 30 times, no breakage | 10.8/9.8 | 1 | ○ |
| Example 4 | 12.8 | 39.2 | 52.9 | 60.8 | 90 | 110 | 1.2 m, 30 times, no breakage | 10.8/10.8 | 1 | ○ |
| Example 5 | 2.5 | 31.4 | 51.0 | 33.3 | 26 | 63 | - | 5.9/5.9 | - | ○ |
| Example 6 | 16.7 | 81.3 | 88.2 | 76.4 | 104 | 124 | 1.2 m, 30 times, no breakage | 13.7/12.7 | 1 | ○ |
| Comparative Example 1 | 6.7 | 67.6 | 65.7 | 73.5 | 104 | 118 | Horizontal , 5 times, seal retired | 12.7/10.8 | 2 | × |
| Comparative Example 2 | 2.4 | 42.1 | 50.0 | 54.9 | 118 | 70 | Vertical, 13 times, breakage occurred | 10.8/9.8 | 5 | × |
| Comparative Example 3 | 2.4 | 44.1 | 50.0 | 56.8 | 120 | 80 | Vertical, 13 times, breakage occurred | 10.8/9.8 | 5 | × |
| Comparative Example 4 | 0.3 | - | - | - | - | - | - | - | - | × |
| Comparative Example 5 | 1.0 | 19.6 | 47.0 | 29.4 | 22 | 58 | - | 5.9/4.9 | - | × |
| Comparative Example 6 | 6.4 | 66.6 | 67.6 | 73.5 | 100 | 103 | Horizontal , 5 times, seal retired | 12.7/10.8 | 2 | × |
| Comparative Example 7 | 12.2 | 72.5 | 75.5 | 82.3 | 97 | 105 | 1.2 m, 30 times, no breakage | 13.7/12.7 | 1 | ○ |

**[Table 3]**

| Packaging container used | Boiling test | Retorting test |
|---|---|---|
| Example 1 | No delamination phenomenon | - |
| Example 2 | No delamination phenomenon | - |
| Example 3 | No delamination phenomenon | - |
| Example 4 | - | No delamination phenomenon |
| Example 6 | No delamination phenomenon | - |

**[Table 4]**

| Packaging container used | Content resistance fitness test (separation strength N/25.4 mm) | | |
|---|---|---|---|
| | Before preservation | After keeping (1 month at 50°C) | |
| | | 10% ethanol solution | Liquid detergent, pH=7.8 |
| Comparative Example 7 | 12.2 | Delamination phenomenon occurred | 10.2 |
| Example 1 | 15.1 | 15.1 | 14.5 |

**[Table 5]**

| | Solvent amount required for dry lamination processing (kg) |
|---|---|
| | Substrate width 1,000 mm × length of processed substrate 1,000 m |
| Comparative Example 7 | 38.7 |
| Example 1 | 0 |

Table 2 shows the results of various tests performed on the standing type and the four-sided sealed bag type packaging containers produced with use of the laminates of Example 1 to Example 6 and Comparative Example 1 to Comparative Example 7, which are the laminates of the present invention.

Comparative Example 7 is a test result of the packaging container produced with use of a laminate, which was produced with use of an adhesive by means of a dry lamination method according to the conventional technique.

Example 1 to Example 6 are test results of the packaging containers each produced with use of the laminate of the present invention, which was produced by means of thermocompression bonding. There is no significant difference between the test result of Comparative Example 7, which is a packaging container produced according to the conventional technique, and the test results of Example 1 to Example 6, which are the packaging containers of the present invention.

Therefore, the laminate of the present invention has a level of property equivalent to that of the laminate produced by means of the dry lamination method with use of an adhesive according to the conventional technique, and it can be used as a constituent material for a packaging container without any problem.

Moreover, Table 3 shows the results of boiling/retorting tests where a boiling test was performed on the packaging container of Examples 1, 2, 3, and 6, and a retorting test was performed on the packaging container of Example 4.

Delamination phenomenon (separation from the lamination surface) occurred in none of these packaging containers, and they have a level of durability similar to that of the packaging container with the laminate produced by means of the normal dry lamination method with use of an adhesive according to the conventional technique.

Furthermore, Table 4 shows the results of evaluation performed as a content resistance fitness test on the laminate bonding strength of the packaging container of Comparative Example 7 produced according to the conventional technique and the packaging container of Example 1 of the present invention, the evaluation being made after elapse of a retention period where the containers had been filled with a content and kept for 1 month at 50°C.

Delamination phenomenon (separation from the lamination surface) did not occur in the packaging container of Example 1, and it had a level of durability similar to or higher than that of the packaging container produced with the laminate produced by means of the normal dry lamination method with use of an adhesive according to the conventional technique.

Moreover, Table 5 shows a calculated amount of solvent (kg) required for the packaging container of Comparative Example 7 produced with the laminate produced by means of the dry lamination method according to the conventional technique with use of an adhesive when 1,000 m of the substrate with a width of 1,000 mm was processed by means of the dry lamination method. The amount of solvent required for dry lamination processing was 38.7 kg.

On the other hand, in the case of the present invention, an adhesive is not used, and therefore it is possible to produce a packaging container without using a solvent at all.

Moreover, by judging based on the test results of Table 1 and Table 2 in a comprehensive manner, the bond strength of the heat-bonding-modified layer formed by means of surface modification performed on the film using an atmospheric pressure plasma processor, may be appropriately controlled as described below. As a result, it is possible to obtain a film that is suitable for carrying out the present invention, and that has a heat-bonding-modified layer formed thereon by means of surface modification performed through an atmospheric pressure plasma treatment.

### (Plasma Treatment on polyamide Resin)

In order to determine the acceptability of the surface with the heat-bonding-modified layer formed on the polyamide (PA) resin film by means of surface modification performed with use of an atmospheric pressure plasma processor, surface modification may be performed using the atmospheric pressure plasma processor, so that when the surface of the polyamide (PA) resin film having the heat-bonding-modified layer formed thereon by means of surface modification, and the air-corona-treated surface of a commercially available air-corona-treated cast polyethylene (PE) resin film (cast polyethylene film, product name: SK615P, manufactured by Tamapoly Co., Ltd.) are provided opposing to each other, and they are thermocompression-bonded with each other while being held for 10 seconds at a temperature of 160°C and with a pressure level of 0.4 MPa without application of an adhesive or anchor coating agent, the bond strength is at least 9.8 N/25.4 mm as a value being measured by the method according to JIS K 6854-1 " Adhesive, Separation-Bonding Strength Testing Method, Part 1: 90-Degree separation".

### (Plasma Treatment on Cast Polyethylene Resin)

In order to determine the acceptability of the surface with the heat-bonding-modified layer formed on the cast polyethylene (PE) resin film by means of surface modification performed with use of an atmospheric pressure plasma processor, surface modification may be performed using the atmospheric pressure plasma processor, so that when the surface of the cast polyethylene (PE) resin film having the heat-bonding-modified layer formed thereon by means of surface modification, and the air-corona-treated surface of a commercially available air-corona-treated polyethylene terephthalate (PET) resin film (biaxially stretched polyethylene terephthalate film, product name: E5102, manufactured by Toyobo Co., Ltd.) are provided opposing to each other, and they are thermocompression-bonded with each other while being held for 10 seconds at a temperature of 160°C and with a pressure level of 0.4 MPa without application of an adhesive or anchor coating agent, the bond strength is at least 5.9 N/25.4 mm as a value being measured by the method according to JIS K 6854-1 " Adhesive, Separation-Bonding Strength Testing Method, Part 1: 90-Degree separation".

### (Plasma Treatment on Polyethylene Terephthalate Resin)

In order to determine the acceptability of the surface with the heat-bonding-modified layer formed on the polyethylene terephthalate (PET) resin film by means of surface modification performed with use of an atmospheric pressure plasma processor, surface modification may be performed using the atmospheric pressure plasma processor, so that when the surface of the polyethylene terephthalate (PET) resin film having the heat-bonding-modified layer formed thereon by means of surface modification, and the air-corona-treated surface of a commercially available air-corona-treated cast polyethylene (PE) resin film (cast polyethylene film, product name: SK615P, manufactured by Tamapoly Co., Ltd.) are provided opposing to each other, and they are thermocompression-bonded with each other while being held for 10 seconds at a temperature of 160°C and with a pressure level of 0.4 MPa without application of an adhesive or anchor coating agent, the bond strength is at least 5.9 N/25.4 mm as a value being measured by the method according to JIS K 6854-1 " Adhesive, Separation-Bonding Strength Testing Method, Part 1: 90-Degree separation".

### (Plasma Treatment on Cast Polypropylene Resin)

In order to determine the acceptability of the surface with the heat-bonding-modified layer formed on the cast polypropylene (CPP) resin film by means of surface modification performed with use of an atmospheric pressure plasma processor, surface modification may be performed using the atmospheric pressure plasma processor, so that when the surface of the cast polypropylene (CPP) resin film having the heat-bonding-modified layer formed thereon by means of surface modification, and the air-corona-treated surface of a commercially available air-corona-treated polyethylene terephthalate (PET) resin film (biaxially stretched polyethylene terephthalate film, product name: E5102, manufactured by Toyobo Co., Ltd.) are provided opposing to each other, and they are thermocompression-bonded with each other while being held for 10 seconds at a temperature of 190°C and with a pressure level of 0.4 MPa without application of an adhesive or anchor coating agent, the bond strength is at least 5.9 N/25.4 mm as a value being measured by the method according to JIS K 6854-1 " Adhesive, Separation-Bonding Strength Testing Method, Part 1: 90-Degree separation".

### (Plasma Treatment on Cellophane Film)

In order to determine the acceptability of the surface with the heat-bonding-modified layer formed on the cellophane film by means of surface modification performed with use of an atmospheric pressure plasma processor, surface modification may be performed using the atmospheric pressure plasma processor, so that when the surface of the cellophane film having the heat-bonding-modified layer formed thereon by means of surface modification, and the air-corona-treated surface of a commercially available air-corona-treated cast polyethylene (PE) resin film (cast polyethylene film, product name: SK615P, manufactured by Tamapoly Co., Ltd.) are provided opposing to each other, and they are thermocompression-bonded with each other while being held for 10 seconds at a temperature of 160°C and with a pressure level of 0.4 MPa without application of an adhesive or anchor coating agent, the bond strength is at least 2.0 N/25.4 mm as a value being measured by the method according to JIS K 6854-1 " Adhesive, Separation-Bonding Strength Testing Method, Part 1: 90-Degree separation".

### INDUSTRIAL APPLICABILITY

According to the present invention, an atmospheric pressure plasma treatment can be effectively performed on a film, by determining the acceptability of the formation state of a heat-bonding-modified layer of a film that has undergone an atmospheric plasma treatment, required for obtaining a laminate which is laminated by means of thermocompression bonding without application of an adhesive or anchor coating agent.

Moreover, according to the present invention, it is possible to obtain a production method of a laminate laminated without use of an adhesive or anchor coating agent, a laminate, and a packaging container produced using the same. The laminate according to the present invention may be used for various applications including cosmetic sheets, optical films, protective films, and packaging containers.

Furthermore, a packaging container produced using the laminate of the present invention may be used for a packaging container or a refill packaging container for various kinds of liquid products such as liquid flavoring materials, liquid detergents, liquid bleaching agents, liquid wax, hair-care products (such as shampoo and conditioner), medical solutions, and liquid cosmetic products, and further, it may be used for various packaging containers for food, electronic components, medical components, medical apparatus components, precision machinery components, and so forth.

Furthermore, according to the present invention, a laminate and a packaging container which uses the same can be produced without using an adhesive or anchor coating agent all, that is to say, without using an organic solvent at all. Therefore, it is effective in environmental handling performance and energy conservation handling performance.

### [Description of Reference Symbols]

1: Untreated first substrate
2: Heat-bonding-modified layer
3: Print Layer
5: Surface-treated first substrate
6: Untreated second substrate
7: Air-corona-treated surface (or heat-bonding-modified layer)
8: Surface-treated second substrate
9: Thermal bonding part
10: Laminate of the present invention
20: Laminate having a print layer according to the present invention
21: Roll of treatment-target first substrate
22: Roll of treatment-target second substrate
23: Atmospheric pressure plasma processor
24: Air corona processor
25: Heated roller
26: Backup roller (or heated roller)
27: Transfer roller
28: Roll of laminate
29: Cooling roller
31: Roll of surface-treated first substrate
32: Roll of surface-treated second substrate
40: Laminate according to the conventional technique
41: First substrate film
42: Second substrate film
43, 44: Air-corona-treated surface
45: Adhesive layer

## Claims

1. A laminate production method, which comprises laminating a first substrate (1, 5) and a second substrate (6, 8) on each other, the first and second substrates comprising thermoplastic resin films or cellophane films and being different in type from each other,
wherein one of the first substrate (1, 5) and the second substrate (6, 8) has a surface having a heat-bonding-modified layer (2) formed by surface modification using an atmospheric plasma treatment apparatus (23), and another has an air corona-treated surface (7),
wherein the first substrate (1, 5) and second substrate (6, 8) are individually fed from the respective rolls of film (21, 22), which are obtained by respectively winding the first substrate (1, 5) and the second substrate (6, 8) each comprising a continuous film having a thickness of 10 to 500 µm and a length of 3 to 10,000 m, so that the surface having the heat-bonding-modified layer (2) formed thereon faces the air corona-treated surface (7),
and the first substrate (1, 5) and second substrate (6, 8) are thermocompression-bonded together using a heated roller (25, 26) without applying an adhesive or anchoring agent to perform a continuous lamination.

2. The method of claim 1, wherein, prior to the lamination of the first substrate (1, 5) and the second substrate (6, 8), one of the first substrate (1, 5) and the second substrate (6, 8), which has a surface having a heat-bonding-modified layer (2) formed by film surface modification using an atmospheric plasma treatment apparatus (23), and a third substrate, which comprises a film the same as or different from the first substrate (1, 5) and second substrate (6, 8) and which has an air corona-treated surface, are thermocompression-bonded together without applying an adhesive or anchoring agent so that the surface having the heat-bonding-modified layer (2) formed thereon of one of the first substrate (1, 5) and the second substrate (6, 8) faces the air corona-treated surface of the third substrate to obtain a test laminate, and then
a bond strength of the bonded surfaces with respect to the test laminate is measured to check the state of the heat-bonding-modified layer (2) formed in one of the first substrate (1, 5) and the second substrate (6, 8).

3. The method according to Claim 2, wherein, when the substrate having a heat-bonding-modified layer formed using an atmospheric plasma treatment apparatus is a polyamide (PA) resin film, an air corona-treated cast polyethylene (PE) resin film is used as the third substrate, and a bond strength is measured with respect to the test laminate obtained by thermocompression bonding at a temperature of 160°C under a pressure of 0.4 MPa for 10 seconds to check that the test laminate has a bond strength of 9.8 N/25.4 mm or more, as measured in accordance with the method described in JIS K 6854-1 "Adhesives - Determination of peel strength of bonded assemblies - Part 1: 90° peel",
wherein, when the substrate having a heat-bonding-modified layer formed using an atmospheric plasma treatment apparatus is a cast polyethylene (PE) resin film, an air corona-treated polyethylene terephtalate (PET) resin film is used as the third substrate, and a bond strength is measured with respect to the test laminate obtained by thermocompression bonding at a temperature of 160°C under a pressure of 0.4 MPa for 10 seconds to check that the test laminate has a bond strength of 5.9 N/25.4 mm or more, as measured in accordance with the method described in JIS K 6854-1 "Adhesives - Determination of peel strength of bonded assemblies - Part 1: 90° peel",
wherein, when the substrate having a heat-bonding-modified layer formed using an atmospheric plasma treatment apparatus is a polyethylene terephtalate (PET) resin film, an air corona-treated cast polyethylene (PE) resin film is used as the third substrate, and a bond strength is measured with respect to the test laminate obtained by thermocompression bonding at a temperature of 160°C under a pressure of 0.4 MPa for 10 seconds to check that the test laminate has a bond strength of 5.9 N/25.4 mm or more, as measured in accordance with the method described in JIS K 6854-1 "Adhesives - Determination of peel strength of bonded assemblies - Part 1: 90° peel",
wherein, when the substrate having a heat-bonding-modified layer formed using an atmospheric plasma treatment apparatus is a cast polypropylene (CPP) resin film, an air corona-treated polyethylene terephtalate (PET) resin film is used as the third substrate, and a bond strength is measured with respect to the test laminate obtained by thermocompression bonding at a temperature of 190°C under a pressure of 0.4 MPa for 10 seconds to check that the test laminate has a bond strength of 5.9 N/25.4 mm or more, as measured in accordance with the method described in JIS K 6854-1 "Adhesives - Determination of peel strength of bonded assemblies - Part 1: 90° peel", and
wherein, when the substrate having a heat-bonding-modified layer formed using an atmospheric plasma treatment apparatus is a cellophane film, an air corona-treated cast polyethylene (PE) resin film is used as the third substrate, and a bond strength is measured with respect to the test laminate obtained by thermocompression bonding at a temperature of 160°C under a pressure of 0.4 MPa for 10 seconds to check that the test laminate has a bond strength of 2.0 N/25.4 mm or more, as measured in accordance with the method described in JIS K 6854-1 "Adhesives - Determination of peel strength of bonded assemblies - Part 1: 90° peel".

4. The method according to any one of Claims 1 to 3, which comprises, after the lamination step, an aging step for allowing the laminate to stand at room temperature for 10 days to one month or at 40 to 60°C for 1 to 3 days.

5. The method according to any one of Claims 1 to 4, wherein the first substrate is one member selected from the group consisting of polyethylene terephtalate (PET), polyamide (PA), polyethylene naphthalate (PEN), polyacrylonitrile (PAN), polycarbonate (PC), polyimide (PI), and a cellophane film, and the second substrate is cast polyethylene (PE) or cast polypropylene (CPP).

6. The method according to any one of Claims 1 to 5, wherein the film of the first substrate has a printing layer formed on at least one surface thereof.

7. A laminate (10) comprising a first substrate (1, 5) and a second substrate (6, 8) laminated on each other, the first and second substrates comprising thermoplastic resin films or cellophane films and being different in type from each other,
wherein each of the first substrate (1, 5) and the second substrate (6, 8) comprises a continuous film having a thickness of 10 to 500 µm and a length of 3 to 10,000 m,
wherein, in the bonded surfaces of the laminate, one of the first substrate (1, 5) and the second substrate (6, 8) has a surface having a heat-bonding-modified layer (2) formed by surface modification using an atmospheric plasma treatment apparatus, and another has an air corona-treated surface (7),
wherein the surface having the heat-bonding-modified layer (2) formed thereon and the air corona-treated surface (7) are thermocompression-bonded together without using an adhesive or anchoring agent.

8. A laminate (10) according to claim 7, wherein the first substrate is one member selected from the group consisting of polyethylene terephtalate (PET), polyamide (PA), polyethylene naphthalate (PEN), polyacrylonitrile (PAN), polycarbonate (PC), polyimide (PI), and a cellophane film, and the second substrate is cast polyethylene (PE) or cast polypropylene (CPP).

9. A packaging container which is produced using the laminate of Claim 7 so that the second substrate becomes the inner surface of the packaging container as a sealant layer.

## Patentansprüche

1. Laminatherstellungsverfahren, welches das Laminieren eines ersten Substrats (1, 5) und eines zweiten Substrats (6, 8) aneinander umfasst, wobei das erste und das zweite Substrat Thermoplastharzfolien oder Cellophanfolien umfassen und von unterschiedlicher Art sind,
wobei das erste Substrat (1, 5) oder das zweite Substrat (6, 8) eine Oberfläche aufweist, die eine wärmeverklebungsmodifizierte Schicht (2) aufweist, die durch Oberflächenmodifizierung mit Hilfe einer Vorrichtung zur atmosphärischen Plasmabehandlung (23) gebildet wird, und das jeweils andere Substrat eine koronabehandelte Oberfläche (7),
wobei das erste Substrat (1, 5) und das zweite Substrat (6, 8) jeweils von entsprechenden Folienrollen (21, 22) zugeführt werden, die durch entsprechendes Wickeln des ersten Substrats (1, 5) und des zweiten Substrats (6, 8) erzielt werden und die jeweils eine durchgehende Folie mit einer Dicke von 10 bis 500 µm und eine Länge vom 3 bis 10.000 m aufweisen, so dass die Oberfläche, auf der die wärmeverklebungsmodifizierte Schicht (2) gebildet ist, der koronabehandelten Oberfläche (7) zugewandt ist, und
das erste Substrat (1, 5) und das zweite Substrat (6, 8) durch Thermokompressionsbonden mit Hilfe einer erwärmten Walze (25, 26) gebondet werden, ohne einen Klebestoff oder ein Verankerungsmittel anzuwenden, um eine durchgehende Laminierung zu erzielen.

2. Verfahren nach Anspruch 1, wobei vor dem Laminieren des ersten Substrats (1, 5) und des zweiten Substrats (6, 8) dasjenige Substrat des ersten Substrats (1, 5) oder des zweiten Substrats (6, 8), das die Oberfläche mit der wärmeverklebungsmodifizierten Schicht (2) aufweist, die durch Folienoberflächenmodifizierung mittels einer Vorrichtung zur atmosphärischen Plasmabehandlung (23) gebildet wurde, und ein drittes Substrat, das eine Folie gleich wie oder anders als das erste Substrat (1, 5) und das zweite Substrat (6, 8) umfasst und eine koronabehandelte Oberfläche aufweist, thermokompressionsgebondet werden, ohne einen Klebstoff oder ein Verankerungsmittel anzuwenden, so dass die Oberfläche mit der darauf gebildeten wärmeverklebungsmodifizierten Schicht (2) des ersten Substrats (1, 5) oder des zweiten Substrats (6, 8) der koronabehandelten Oberfläche des dritten Substrats zugewandt ist, um ein Testlaminat zu erzielen, und danach
eine Bindefestigkeit der gebondeten Oberflächen in Bezug auf das Testlaminat gemessen wird, um den Zustand der wärmeverklebungsmodifizierten Schicht (2) zu prüfen, die im ersten Substrat (1, 5) oder im zweiten Substrat (6, 8) gebildet ist.

3. Verfahren nach Anspruch 2, wobei, wenn das Substrat mit einer wärmeverklebungsmodifizierten Schicht, die mittels einer Vorrichtung zur atmosphärischen Plasmabehandlung gebildet wurde, eine Polyamid-(PA)-Harzfolie ist, für das dritte Substrat eine koronabehandelte Polyethylen-(PE)-Gießharzfolie verwendet wird und in Bezug auf das Testlaminat, das durch Thermokompressionsbonden bei einer Temperatur von 160 °C unter einem Druck von 0,4 MPa über 10 Sekunden erzielt wurde, eine Bindungsfestigkeit gemessen wird, um zu prüfen, ob das Testlaminat eine Bindungsfestigkeit von 9,8 N / 25,4 mm oder mehr aufweist, wie es gemäß dem in JIS K 6854-1 "Adhesives - Determination of peel strength of bonded assemblies - Part 1: 90° peel" beschriebenen Verfahren gemessen wird,
wobei, wenn das Substrat mit einer wärmeverklebungsmodifizierten Schicht, die mittels einer Vorrichtung zur atmosphärischen Plasmabehandlung gebildet wurde, eine Polyethylen-(PE)-Gießharzfolie ist, für das dritte Substrat eine koronabehandelte Polyethylenterephthalat-(PET)-Harzfolie verwendet wird und in Bezug auf das Testlaminat, das durch Thermokompressionsbonden bei einer Temperatur von 160 °C unter einem Druck von 0,4 MPa über 10 Sekunden erzielt wurde, eine Bindungsfestigkeit gemessen wird, um zu prüfen, ob das Testlaminat eine Bindungsfestigkeit von 5,9 N / 25,4 mm oder mehr aufweist, wie es gemäß dem in JIS K 6854-1 "Adhesives - Determination of peel strength of bonded assemblies - Part 1: 90° peel" beschriebenen Verfahren gemessen wird,
wobei, wenn das Substrat mit einer wärmeverklebungsmodifizierten Schicht, die mittels einer Vorrichtung zur atmosphärischen Plasmabehandlung gebildet wurde, eine Polyethylenterephthalat-(PET)-Harzfolie ist, für das dritte Substrat eine koronabehandelte Polyethylen-(PE)-Gießharzfolie verwendet wird und in Bezug auf das Testlaminat, das durch Thermokompressionsbonden bei einer Temperatur von 160 °C unter einem Druck von 0,4 MPa über 10 Sekunden erzielt wurde, eine Bindungsfestigkeit gemessen wird, um zu prüfen, ob das Testlaminat eine Bindungsfestigkeit von 5,9 N / 25,4 mm oder mehr aufweist, wie es gemäß dem in JIS K 6854-1 "Adhesives - Determination of peel strength of bonded assemblies - Part 1: 90° peel" beschriebenen Verfahren gemessen wird,
wobei, wenn das Substrat mit einer wärmeverklebungsmodifizierten Schicht, die mittels einer Vorrichtung zur atmosphärischen Plasmabehandlung gebildet wurde, eine Polypropylen-Gießharz-(CPP)-Folie ist, für das dritte Substrat eine koronabehandelte Polyethylenterephthalat-(PET)-Harzfolie verwendet wird und in Bezug auf das Testlaminat, das durch Thermokompressionsbonden bei einer Temperatur von 190 °C unter einem Druck von 0,4 MPa über 10 Sekunden erzielt wurde, eine Bindungsfestigkeit gemessen wird, um zu prüfen, ob das Testlaminat eine Bindungsfestigkeit von 5,9 N / 25,4 mm oder mehr aufweist, wie es gemäß dem in JIS K 6854-1 "Adhesives - Determination of peel strength of bonded assemblies - Part 1: 90° peel" beschriebenen Verfahren gemessen wird, und
wobei, wenn das Substrat mit einer wärmeverklebungsmodifizierten Schicht, die mittels einer Vorrichtung zur atmosphärischen Plasmabehandlung gebildet wurde, eine Cellophanfolie ist, für das dritte Substrat eine koronabehandelte Polyethylen-(PE)-Gießharzfolie verwendet wird und in Bezug auf das Testlaminat, das durch Thermokompressionsbonden bei einer Temperatur von 160 °C unter einem Druck von 0,4 MPa über 10 Sekunden erzielt wurde, eine Bindungsfestigkeit gemessen wird, um zu prüfen, ob das Testlaminat eine Bindungsfestigkeit von 2,0 N / 25,4 mm oder mehr aufweist, wie es gemäß dem in JIS K 6854-1 "Adhesives - Determination of peel strength of bonded assemblies - Part 1: 90° peel" beschriebenen Verfahren gemessen wird.

4. Verfahren nach einem der Ansprüche 1 bis 3, das nach dem Laminierschritt einen Alterungsschritt umfasst, um es dem Laminat zu gestatten, bei Raumtemperatur 10 Tage bis zu einem Monat oder bei 40 bis 60 °C 1 bis 3 Tage abzustehen.

5. Verfahren nach einem der Ansprüche 1 bis 4, wobei das erste Substrat ein Element ist, das aus der Gruppe ausgewählt wird, die aus Polyethylenterephthalat- (PET), Polyamid- (PA), Polyethylennaphthalat- (PEN), Polyacrylnitril-(PAN), Polycarbonat- (PC), Polyimid- (PI) und einer Cellophanfolie besteht, und das zweite Substrat Polyethylen-(PE)-Gießfolie oder Polypropylen-Gießfolie (CPP) ist.

6. Verfahren nach einem der Ansprüche 1 bis 5, wobei die Folie des ersten Substrats eine bedruckbare Schicht aufweist, die auf mindestens einer ihrer Oberflächen gebildet ist.

7. Laminat (10), ein erstes Substrat (1, 5) und ein zweites Substrat (6, 8) umfassend, die aneinander laminiert sind, Thermoplastharzfolien oder Cellophanfolien umfassen und von unterschiedlicher Art sind,
wobei jeweils das erste Substrat (1, 5) und das zweite Substrat (6, 8) eine durchgehende Folie mit einer Dicke von 10 bis 500 µm und eine Länge vom 3 bis 10.000 m aufweist,
wobei das erste Substrat (1, 5) oder das zweite Substrat (6, 8) an den gebondeten Oberflächen des Laminats eine Oberfläche mit einer wärmeverklebungsmodifizierten Schicht (2) aufweist, die mittels einer Vorrichtung zur atmosphärischen Plasmabehandlung gebildet wurde, und das jeweils andere eine koronabehandelte Oberfläche (7) aufweist,
wobei die Oberfläche mit der darauf gebildeten wärmeverklebungsmodifizierten Schicht (2)und die koronabehandelte Oberfläche (7) thermokompressionsgebondet sind, ohne einen Klebstoff oder ein Verankerungsmittel zu verwenden.

8. Laminat (10) nach Anspruch 7, wobei das erste Substrat ein Element ist, das aus der Gruppe ausgewählt wird, die aus Polyethylenterephthalat-(PET), Polyamid- (PA), Polyethylennaphthalat-(PEN), Polyacrylnitril- (PAN), Polycarbonat- (PC), Polyimid- (PI) und einer Cellophanfolie besteht, und das zweite Substrat Polyethylen-(PE)-Gießfolie oder Polypropylen-Gießfolie (CPP) ist.

9. Verpackungsbehälter, der unter Verwendung des Laminats nach Anspruch 7 derart hergestellt ist, dass das zweite Substrat als Dichtungsschicht die Innenfläche des Verpackungsbehälters bildet.

## Revendications

1. Procédé de production d'un stratifié, qui comprend la stratification d'un premier substrat (1, 5) et d'un deuxième substrat (6, 8) l'un sur l'autre, le premier et le deuxième substrat comprenant des films de résine thermoplastique ou des films de cellophane et étant de type différent l'un de l'autre,
dans lequel un des premier substrat (1, 5) et deuxième substrat (6, 8) a une surface ayant une couche modifiée par liaison thermique (2) formée par une modification de surface au moyen d'un appareil de traitement par plasma atmosphérique (23) et l'autre a une surface traitée par effet couronne de l'air (7),
dans lequel le premier substrat (1, 5) et le deuxième substrat (6, 8) sont alimentés individuellement à partir des rouleaux respectifs de film (21, 22), qui sont obtenus par bobinage respectif du premier substrat (1, 5) et du deuxième substrat (6, 8) comprenant chacun un film continu ayant une épaisseur de 10 à 500 µm et une longueur de 3 à 10 000 m, de sorte que la surface ayant la couche modifiée par liaison thermique (2) formée sur celle-ci fasse face à la surface traitée par effet couronne de l'air (7),
et le premier substrat (1, 5) et le deuxième substrat (6, 8) sont liés ensemble par thermocompression au moyen d'un rouleau chauffé (25, 26) sans appliquer d'agent adhésif ou d'ancrage pour réaliser une stratification continue.

2. Procédé selon la revendication 1, dans lequel, avant la stratification du premier substrat (1, 5) et du deuxième substrat (6, 8), un des premier substrat (1, 5) et deuxième substrat (6, 8) qui a une surface ayant une couche modifiée par liaison thermique (2) formée par modification de la surface du film au moyen d'un appareil de traitement par plasma atmosphérique (23), et un troisième substrat, qui comprend un film identique ou différent du premier substrat (1, 5) et du deuxième substrat (6, 8) et qui a une surface traitée par effet couronne de l'air, sont liés ensemble par thermocompression sans appliquer d'agent adhésif ou d'ancrage de sorte que la surface ayant la couche modifiée par liaison thermique (2) formée sur celle-ci d'un du premier substrat (1, 5) et du deuxième substrat (6, 8) fasse face à la surface traitée par effet couronne de l'air du troisième substrat pour obtenir un stratifié de test, et ensuite
une force de liaison des surfaces liées par rapport au stratifié de test est mesurée pour vérifier l'état de la couche modifiée par liaison thermique (2) formée à partir d'un du premier substrat (1, 5) et du deuxième substrat (6, 8).

3. Procédé selon la revendication 2, dans lequel, lorsque le substrat ayant une couche modifiée par liaison thermique formée au moyen d'un appareil de traitement par plasma atmosphérique est un film de résine de polyamide (PA), un film de résine de polyéthylène (PE) coulé traité par effet couronne de l'air est utilisé en tant que troisième substrat, et une force de liaison est mesurée par rapport au stratifié de test obtenu par liaison par thermocompression à une température de 160 °C sous une pression de 0,4 MPa pendant 10 secondes pour vérifier que le stratifié de test a une force de liaison de 9,8 N/25,4 mm ou plus, comme mesuré conformément à la méthode décrite dans la norme JIS K 6854-1 « Adhésifs - Détermination de la résistance au pelage d'assemblages liés - Partie 1 : pelage à 90° »,
dans lequel, lorsque le substrat ayant une couche modifiée par liaison thermique formée au moyen d'un appareil de traitement par plasma atmosphérique est un film de résine polyéthylène (PE) coulé, un film de résine de téréphtalate de polyéthylène (PET) traité par effet couronne de l'air est utilisé en tant que troisième substrat, et une force de liaison est mesurée par rapport au stratifié de test obtenu par liaison par thermocompression à une température de 160 °C sous une pression de 0,4 MPa pendant 10 secondes pour vérifier que le stratifié de test a une force de liaison de 5,9 N/25,4 mm ou plus, comme mesuré conformément à la méthode décrite dans la norme JIS K 6854-1 « Adhésifs - Détermination de la résistance au pelage d'assemblages liés - Partie 1 : pelage à 90° »,
dans lequel, lorsque le substrat ayant une couche modifiée par liaison thermique formée au moyen d'un appareil de traitement par plasma atmosphérique est un film de résine de téréphtalate de polyéthylène (PET), un film de résine de polyéthylène (PE) coulé traité par effet couronne de l'air est utilisé en tant que troisième substrat, et une force de liaison est mesurée par rapport au stratifié de test obtenu par liaison par thermocompression à une température de 160 °C sous une pression de 0,4 MPa pendant 10 secondes pour vérifier que le stratifié de test a une force de liaison de 5,9 N/25,4 mm ou plus, comme mesuré conformément à la méthode décrite dans la norme JIS K 6854-1 « Adhésifs - Détermination de la résistance au pelage d'assemblages liés - Partie 1 : pelage à 90° »,
dans lequel, lorsque le substrat ayant une couche modifiée par liaison thermique formée au moyen d'un appareil de traitement par plasma atmosphérique est un film de résine de polypropylène coulé (PPC), un film de résine de téréphtalate de polyéthylène (PET) traité par effet couronne de l'air est utilisé en tant que troisième substrat, et une force de liaison est mesurée par rapport au stratifié de test obtenu par liaison par thermocompression à une température de 190 °C sous une pression de 0,4 MPa pendant 10 secondes pour vérifier que le stratifié de test a une force de liaison de 5,9 N/25,4 mm ou plus, comme mesuré conformément à la méthode décrite dans la norme JIS K 6854-1 « Adhésifs-Détermination de la résistance au pelage d'assemblages liés - Partie 1 : pelage à 90° », et
dans lequel, lorsque le substrat ayant une couche modifiée par liaison thermique formée au moyen d'un appareil de traitement par plasma atmosphérique est un film de cellophane, un film de résine de polyéthylène (PE) coulé traité par effet couronne de l'air est utilisé en tant que troisième substrat, et une force de liaison est mesurée par rapport au stratifié de test obtenu par liaison par thermocompression à une température de 160 °C sous une pression de 0,4 MPa pendant 10 secondes pour vérifier que le stratifié de test a une force de liaison de 2,0 N/25,4 mm ou plus, comme mesuré conformément à la méthode décrite dans la norme JIS K 6854-1 « Adhésifs-Détermination de la résistance au pelage d'assemblages liés - Partie 1 : pelage à 90° ».

4. Procédé selon l'une quelconque des revendications 1 à 3, qui comprend, après l'étape de stratification, une étape de vieillissement consistant à laisser le stratifié à température ambiante pendant 10 jours à 1 mois ou à 40 à 60 °C pendant 1 à 3 jours.

5. Procédé selon l'une quelconque des revendications 1 à 4, dans lequel le premier substrat est un élément choisi dans le groupe constitué par le téréphtalate de polyéthylène (PET), le polyamide (PA), le naphtalate de polyéthylène (PEN), le polyacrylonitrile (PAN), le polycarbonate (PC), le polyimide (PI) et un film de cellophane, et le deuxième substrat est un polyéthylène (PE) coulé ou un polypropylène coulé (PPC).

6. Procédé selon l'une quelconque des revendications 1 à 5, dans lequel le film du premier substrat a une couche d'impression formée sur au moins une surface de celui-ci.

7. Stratifié (10) comprenant un premier substrat (1, 5) et un deuxième substrat (6, 8) stratifiés l'un sur l'autre, le premier et le deuxième substrat comprenant des films de résine thermoplastique ou des films de cellophane et étant de type différent l'un de l'autre,
dans lequel chacun des premier substrat (1, 5) et deuxième substrat (6, 8) comprend un film continu ayant une épaisseur de 10 à 500 µm et une longueur de 3 à 10 000 m,
dans lequel, dans l'une des surfaces liées du stratifié, un des premier substrat (1, 5) et deuxième substrat (6, 8) a une surface ayant une couche modifiée par liaison thermique (2) formée par une modification de surface au moyen d'un appareil de traitement par plasma atmosphérique, et l'autre a une surface traitée par effet couronne de l'air (7),
dans lequel la surface ayant la couche modifiée par liaison thermique (2) formée sur celle-ci et la surface traitée par effet couronne de l'air (7) sont liées ensemble par thermocompression sans utiliser d'agent adhésif ou d'ancrage.

8. Stratifié (10) selon la revendication 7, dans lequel le premier substrat est un élément choisi dans le groupe constitué par le téréphtalate de polyéthylène (PET), le polyamide (PA), le naphtalate de polyéthylène (PEN), le polyacrylonitrile (PAN), le polycarbonate (PC), le polyimide (PI) et un film de cellophane, et le deuxième substrat est un polyéthylène (PE) coulé ou un polypropylène coulé (PPC).

9. Contenant de conditionnement qui est produit en utilisant le stratifié selon la revendication 7 de sorte que le deuxième substrat devienne la surface interne du contenant de conditionnement en tant que couche d'étanchéité.
